# EUROPÄISCHE PATENTSCHRIFT

(11) **EP 3 504 272 B1**
(45) Veröffentlichungstag und Bekanntmachung des Hinweises auf die Patenterteilung: **23.09.2020**
(21) Anmeldenummer: 17755514.1
(22) Anmeldetag: 23.08.2017
(51) Int. Cl.: C08L 69/00, C08K 3/34

(54) **POLYCARBONATZUSAMMENSETZUNG UMFASSEND TALK**
POLYCARBONATE COMPOSITION COMPRISING TALC
COMPOSITIONS DE POLYCARBONATE COMPRENANT DU TALC

(30) Priorität: 24.08.2016 EP 16185526
(43) Veröffentlichungstag der Anmeldung: 03.07.2019
(73) Patentinhaber: Covestro Intellectual Property GmbH & Co. KG, 51373 Leverkusen (DE)
(72) Erfinder: SCHIRWITZ, Christopher, 51375 Leverkusen (DE); ERKELENZ, Michael, 47239 Duisburg (DE); SÄMISCH, Birte, 50733 Köln (DE); MEYER, Alexander, 40489 Düsseldorf (DE)
(74) Vertreter: Levpat
(86) Internationale Anmeldenummer: PCT/EP2017/071215
(87) Internationale Veröffentlichungsnummer: WO 2018/037037

(56) Entgegenhaltungen:
- EP-A1- 1 860 155
- EP-A1- 2 574 642
- WO-A1-2013/045552
- WO-A1-2015/189753

## Beschreibung

Die vorliegende Erfindung betrifft eine Zusammensetzung, umfassend ein Polycarbonat, Talk, wobei der eingesetzte Talk unbeschlichtet ist, und ein spezielles anhydridmodifiziertes alpha-Olefin-Polymer, wobei die Mengen des Talks und des speziellen anhydridmodifizierten alpha-Olefin-Polymers ein bestimmtes Verhältnis aufweisen. Des Weiteren betrifft die vorliegende Erfindung Verfahren zur Beschlichtung von Talk, die Herstellung der erfindungsgemäßen Zusammensetzung, deren Verwendung zur Herstellung von Formteilen sowie die Formteile selbst. Dabei wird die erfindungsgemäße Zusammensetzung insbesondere zur Herstellung von Formteilen mit verbesserter multiaxialer Schlagzähigkeit verwendet. Die Erfindung betrifft außerdem die Stabilisierung von Polycarbonat in einer Zusammensetzung, der unbeschlichteter Talk zugesetzt wird.

Es ist bekannt, dass die Zugabe von Talk zu aufgeschmolzenen Polycarbonaten zu einem Abbau der Polymerketten führt, was sich letztendlich in schlechteren mechanischen Eigenschaften der resultierenden Polycarbonatformkörper niederschlägt. Dabei ist die Verstärkung von Polycarbonaten durch den Füllstoff Talk auf Grund der Wärmeleitfähigkeit von Talk für viele Anwendungen wünschenswert.

Um dennoch Formkörper, umfassend Polycarbonate und Talk, mit ausreichenden mechanischen Eigenschaften zu realisieren, werden für die Herstellung der Formkörper stabilisierte Zusammensetzungen verwendet. Ein Ansatzpunkt stellt hier die vorherige Beschlichtung des Talks dar, wodurch die basischen Gruppen des Talks, welche für die Esterspaltung im Polycarbonat verantwortlich sind, chemisch maskiert werden und somit ein Abbau der Polymerketten im Wesentlichen verhindert werden kann. Eine solche Beschlichtung des Talks stellt jedoch einen zusätzlichen Verfahrensschritt dar, dem der Füllstoff Talk zuvor unterzogen werden muss. Ein solcher zusätzlicher Verfahrensschritt ist immer mit erhöhten Kosten sowie Zeitaufwand verbunden und daher nachteilig.

Aus der JP 08-188708 A sind Zusammensetzungen bekannt, welche 45 bis 97 Gew.-% eines aromatischen Polycarbonats mit 3 bis 55 Gew.-% eines anorganischen Füllstoffes (Glasflocken, Metallflocken, Mica oder Talk) und 0,02 bis 3 Gew.-%, bevorzugt 0,03 bis 1 Gew.-% eines olefinischen Wachses (entsprechen 0,006 bis 3,33 Teile Wachs auf 10 Teile Füllstoff), das carboxylische Gruppen oder Derivate hiervon enthält, enthalten. Auch in diesem Dokument wird darauf verwiesen, dass bei der Verwendung von Talk als Füllstoff ein silanbeschichtetes Material verwendet werden sollte, um einen basischen Abbau des Polycarbonats zu vermeiden. In Beispiel 11 wird eine Zusammensetzung, umfassend 0,05 Teile Wachs auf 10 Teile Talk beschrieben. Allerdings gibt die JP 08-188708 A keinerlei Hinweis darauf, wie der zusätzliche Schritt einer vorherigen Beschlichtung des Füllstoffes vermieden werden kann. Insbesondere kann diesem Dokument keinerlei Hinweis auf die Optimierung des zu verwendenden Wachses in Bezug auf den Füllstoff Talk und die resultierenden Eigenschaften der Formkörper, insbesondere der multiaxialen Schlagzähigkeit, entnommen werden.

In der JP 07-238213 A werden Zusammensetzungen beschrieben, die neben einem aromatischen Polycarbonat, einem pfropf-modifizierten Olefin-Kautschuk, einem Polyorganosiloxan-Kautschuk und einer verstärkenden Faser ein oder mehrere olefinische Wachse und/oder olefinische Polymere enthalten, die carboxylische oder Carbonsäureanhydridgruppen aufweisen. Dabei werden Mengenbereiche von 0,02 bis 150 Teile Wachs auf 10 Teile Faser offenbart. Dieses Dokument spricht ausschließlich von der Verstärkung durch Fasern, welche vorteilhafterweise beschlichtet sind. Talk und Fasern verhalten sich hinsichtlich der Verstärkungswirkung verschieden.

Die WO 2013/045552 A1 beschreibt eine Polycarbonatzusammensetzung, welche 2 bis 40 Gewichtsteile eins anorganischen Füllstoffes, welcher unter anderem auch Talk sein kann, enthält und 0,01 bis 0,5 Gewichtsteile eines anyhdridmodifizierten alpha-Olefin-Terpolymers. In einigen Beispielen der WO 2013/045552 A1 wird die Verwendung von 0,5 oder 1,0 Teilen eines Wachses auf 10 Teile Glasfaser oder Quarzmehl beschrieben. Talk wird in den Beispielen nicht verwendet. Die spezielle Problematik des Abbaus durch die Verwendung von Talk wird insgesamt nicht angesprochen. Auch kann der Fachmann diesem Dokument keine Lehre über eine mögliche Optimierung des zu verwendenden Wachses in Bezug auf Talk und eine mögliche Verbesserung der multiaxialen Schlagzähigkeit entnehmen.

Aus der WO 2013/079634 A1 sind Zusammensetzungen bekannt, welche aromatisches Polycarbonat, ein Flammschutzmittel, ein kautschukfreies anhydrid-modifiziertes alpha-Olefin-Terpolymer, eine Glasfaser sowie ein Antidrippingmittel umfassen. Dabei können 0,20 bis 1,50 Gewichtsteile des kautschukfreien anhydrid-modifzierten alpha-Olefin-Terpolymers auf 5,0 bis 40,0 Gewichtsteile der Glasfaser verwendet werden (entsprechen 0,05 bis 3 Teile des kautschukfreien anhydrid-modifzierten alpha-Olefin-Terpolymers auf 10 Teile Glasfaser). In den Beispielen werden 0,7 Teile eines Wachses auf 10 Teile einer Glasfaser verwendet und deren Einfluss auf die multiaxiale Schlagzähigkeit (Durchstoßexperiment nach ISO 6603-2) untersucht. Dieses Dokument gibt jedoch keinerlei Hinweis darauf, welchen Einfluss spezielle Wachse auf Talk als Füllstoff aufweisen.

Die EP 2574642 A1 beschreibt flammwidrige Formmassen mit gutem Fließverhalten und guter (Kerb)Schlagzähigkeit, die neben Polycarbonat stets Pfropfpolymerisate enthalten.

Die EP 1860155 A1 beschreibt gefüllte thermoplastische Zusammensetzungen mit hoher Chemikalienbeständigkeit, die maßgeblich durch eine gezielte Mischung bestimmter PET- und Polycarbonat-Typen erzielt wird. Die freien Carboxylgruppen der Polyester wirken stabilisierend auf die durch den Talk gegebene Basenlast.

Die WO 2015/189753 A1 beschreibt gefüllte Polycarbonat-Zusammensetzungen mit guter Impact Performance. Das stets enthaltene BDP und das PET wirken stabilisierend auf diese Zusammensetzungen.

Ausgehend vom Stand der Technik lag der vorliegenden Erfindung die Aufgabe zu Grunde, eine Zusammensetzung, enthaltend ein Polycarbonat und Talk als Füllstoff, bereitzustellen, wobei die Verwendung von vorbehandeltem Talk, d. h. die Verwendung von beschlichtetem Talk, vermieden werden kann. Insbesondere sollen diese Zusammensetzungen weiterhin die aus dem Stand der Technik bekannten Eigenschaften wie gute Fließfähigkeit, hohe Steifigkeit und hohe Zähigkeit beibehalten. Bevorzugt soll das Profil der Eigenschaften, umfassend Fließfähigkeit, hohe Steifigkeit und hohe Zähigkeit gegenüber dem Stand der Technik verbessert werden. Insbesondere lag der vorliegenden Erfindung die Aufgabe zu Grunde, eine Zusammensetzung, enthaltend ein Polycarbonat und Talk als Füllstoff, bereitzustellen, in welcher unbeschlichteter Talk verwendet wird und aus der Formkörper mit guter, bevorzugt verbesserter multiaxialer Schlagzähigkeit, insbesondere gemäß DIN EN ISO 6603-2:2002, und Verstärkung (E-Modul) erhalten werden können. Weiterhin weisen die erfindungsgemäßen Zusammensetzungen eine gute Wärmeleitfähigkeit auf, insbesondere in der Fläche eines nach ASTM E 1461 geprüften Spritzgusskörpers. Zusammensetzungen mit geringer bis mittlerer Wärmeleitfähigkeit im Bereich von 0,3 bis 2 W/(mK) sind insbesondere vorteilhaft für die Herstellung von Formteilen wie Gehäusen oder Gehäuseteilen im elektronischen Bereich, Gehäusen für mobile Elektronik oder Karosserieteile im Automobilbereich.

Gelöst wurden diese Aufgabe durch die Bereitstellung der erfindungsgemäßen Zusammensetzungen, das erfindungsgemäße Verfahren zur Beschlichtung von Talk, das erfindungsgemäße Formteil sowie die erfindungsgemäße Verwendung, welche alle unten näher erläutert werden.

Es wurde überraschenderweise gefunden, dass durch die Vermischung eines speziellen Wachses, welches eine spezielle Säurezahl und ein spezielles Molekulargewicht aufweist, mit einem unbeschlichteten Talk, insbesondere einem Talk mit einem alkalischen pH-Wert bevorzugt von 8 bis 10, ab dem Zeitpunkt der Zugabe des Talks als Füllstoff zur Polycarbonatschmelze eine Beschlichtung erzielt werden kann, die ausreichend ist, um den Abbau ("Degradation") der Estergruppen des Polycarbonats zu reduzieren. Dies bedeutet, dass ein unbeschlichteter Talk, worunter auch ein Talkgemisch verstanden wird, B) ohne Vorbehandlung direkt zu Polycarbonat A) gegeben werden kann, wenn gleichzeitig ein anhydridmodifiziertes alpha-Olefin-Polymer C) zugegeben wird. Obwohl der Talk unbeschlichtet ist, findet bei der Vermischung der Komponenten A) bis C) eine ausreichende Anlagerung des Wachses C) an der Oberfläche des Talks B) statt ("in-situ Beschlichtung"). Die Aufgabe wird somit weiterhin gelöst durch die Verwendung von anhydridmodifiziertem alpha-Olefin-Polymer mit einer Säurezahl, bestimmt mittels potentiometrischer Titration mit alkoholischer Kaliumhydroxid-Lösung gemäß DIN ISO 17025:2005, von mindestens 30 mg KOH/g und einem mittleren Molekulargewicht Mw von 4.000 bis 40.000 g/mol, wobei das mittlere Molekulargewicht Mw bestimmt wird mittels Gelpermeationschromatographie in ortho-Dichlorbenzol bei 150 °C mit Polystyrolkalibrierung, zur Stabilisierung von Polycarbonat in einer Zusammensetzung, der unbeschlichteter Talk zugesetzt wird, wobei pro 10 Gewichtsteile des unbeschlichteten Talks 0,10 bis 1,4 Gewichtsteile, bevorzugt 0,3 bis 1,0 Gewichtsteile des anhydridmodifizierten alpha-Olefin-Polymers eingesetzt werden. Bevorzugt enthält die Zusammensetzung keinen Polyester und kein Pfropfpolymerisat, ganz besonders bevorzugt überhaupt keinen Impact Modifier außer dem teilweise in der Literatur als Impact Modifier bezeichneten anhydridmodifizierte alpha-Olefin-Polymer gemäß Komponente C).

Die erfindungsgemäßen Zusammensetzungen zeichnen sich dadurch aus, dass auf diese Weise die Eigenschaften wie gute Fließfähigkeit, hohe Steifigkeit und hohe Zähigkeit der Polycarbonat/Talk-Zusammensetzungen beibehalten, gegenüber dem Stand der Technik sogar auch verbessert werden können. Dadurch ist es möglich, den zusätzlichen Schritt der Vorbehandlung des Talks bzw. des Talkgemisches B) mit einer Schlichte zu vermeiden und somit eine kostengünstiger und effizienter herzustellende Zusammensetzung bereitzustellen.

Dabei konnte beobachtet werden, dass die Säurezahl und die Molmasse des Wachses C) einen Einfluss auf die Effizienz der in-situ Beschlichtung sowie auch auf die resultierenden Eigenschaften eines Formkörpers, erhältlich aus der erfindungsgemäßen Zusammensetzung, aufweisen. Insbesondere wurde überraschenderweise gefunden, dass eine Mindestmenge an einem speziellen Wachs C) vorhanden sein muss, damit das Eigenschaftsniveau beibehalten oder sogar verbessert werden kann. Gleichzeitig wirkt sich eine zu hohe Menge an Wachs negativ auf die multiaxiale Schlagzähigkeit des resultierenden Formkörpers aus. Nur mit einer bestimmten Säurezahl und Molmasse des Wachses C) sowie einem optimierten Verhältnis von Talk zu Wachs können mit den erfindungsgemäßen Zusammensetzungen trotz Verwendung eines unbeschlichteten Talks bzw. Talkgemisches B) Zusammensetzungen mit guter multiaxialer Schlagzähigkeit erhalten werden.

Es wurde weiterhin überraschend festgestellt, dass die Fließfähigkeit der erfindungsgemäßen Zusammensetzung gegenüber Polycarbonat vor der Vermischung mit den Komponenten B) und C) verbessert ist. Dies konnte vom Fachmann so nicht erwartet werden, insbesondere dann nicht, wenn die Zusammensetzung keinen Polyester als Impact Modifier enthält. Selbst bei hohen Füllgraden mit Talk kann dieser Effekt beobachtet werden.

Gegenstand der vorliegenden Erfindung ist daher eine Zusammensetzung, erhältlich durch Vermischen zumindest der Komponenten A) bis C), wobei
A) ein Polycarbonat ist,
B) unbeschlichteter Talk ist, und
C) mindestens ein anhydridmodifiziertes alpha-Olefin-Polymer mit einer Säurezahl von mindestens 30 mg KOH/g, bestimmt mittels potentiometrischer Titration mit alkoholischer Kaliumhydroxid-Lösung gemäß DIN ISO 17025:2005, und einem mittleren Molekulargewicht Mw von 4.000 bis 40.000 g/mol ist, wobei das mittlere Molekulargewicht Mw bestimmt wird mittels Gelpermeationschromatographie in ortho-Dichlorbenzol bei 150 °C mit Polystyrolkalibrierung,
   wobei die Mengen der Komponenten B) und C) vor der Vermischung mit Komponente C) so aufeinander abgestimmt sind, dass pro 10 Gewichtsteile der Komponente B) 0,10 bis 1,4 Gewichtsteile der Komponente C) eingesetzt werden und wobei die Zusammensetzung frei ist von Pfropfpolymerisaten und Polyestern, bevorzugt frei ist von von Komponente C) - welche in der Literatur teilweise als Impact Modifier bezeichnet wird, verschiedenen Impact Modifiern.

Im Sinne der vorliegenden Erfindung wird unter dem Begriff "Vermischung"/"vermischen" bevorzugt das "miteinander in Kontakt Bringen" der Komponenten A) bis C) verstanden. Bevorzugt werden dazu mechanische Hilfsmittel verwendet. Die Vermischung findet bei Temperaturen statt, in denen die Komponente A) zumindest teilweise aufgeschmolzen ist. Bevorzugt findet die Vermischung bei Temperaturen im Bereich von 250 °C bis 350 °C statt. Besonders bevorzugt sind Temperaturen von 260 °C bis 310 °C für im Wesentlichen Bisphenol A basierte Polycarbonate. "Im Wesentlichen" bedeutet hierbei einen Anteil von bevorzugt mindestens 90 Gew.-%, weiter bevorzugt mindestens 95 Gew.-%, ganz besonders bevorzugt mindestens 98 Gew.-% Bisphenol A, bezogen auf die Gesamtmenge an eingesetzten Diphenolen. Für Copolycarbonate mit beispielsweise Diphenolen, ausgewählt aus 1,1-Bis-(4-hydroxyphenyl)-3,3,5-trimethylcyclohexan, Diphenolen der nachfolgend dargestellten Formeln (I), (II) und/oder (III) und/oder siloxanhaltigen Copolycarbonaten liegen die Temperaturen vorzugsweise im Bereich von 280 °C bis 350 °C. Die Vermischung kann auf üblichen Compoundieraggregaten durchgeführt werden. Bevorzugt sind Schneckenextruder, Ringextruder oder (Ko-)Kneter.

### Komponente A)

Bei Komponente A) handelt es sich um mindestens ein Polycarbonat. Als Komponente A) können somit auch Mischungen eingesetzt werden. Polycarbonate im Sinne der vorliegenden Erfindung sind sowohl Homopolycarbonate als auch Copolycarbonate; die Polycarbonate können in bekannter Weise linear oder verzweigt sein. Bevorzugt handelt es sich bei dem mindestens einen Polycarbonat um ein aromatisches Polycarbonat.

Die Herstellung der Polycarbonate erfolgt in bekannter Weise aus Diphenolen, Kohlensäurederivaten, gegebenenfalls Kettenabbrechern und Verzweigern. Im Fall der Homopolycarbonate wird nur ein Diphenol eingesetzt, im Fall der Copolycarbonate werden mehrere Diphenole eingesetzt. Ebenso können zur Herstellung der erfindungsgemäßen Copolycarbonate 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (z. B. US 3 419 634 A) und nach literaturbekannten Verfahren herstellbar. Ebenfalls geeignet sind polydiorganosiloxanhaltige Copolycarbonate; die Herstellung der polydiorganosiloxanhaltiger Copolycarbonate ist beispielsweise in der DE-A 3 334 782 beschrieben.

Die Herstellung von Polycarbonaten erfolgt z.B. durch Umsetzung von Diphenolen mit Kohlensäurehalogeniden, vorzugsweise Phosgen, und/oder mit Dicarbonsäuredihalogeniden, vorzugsweise aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich.

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Diphenole sind ausgewählt aus mindestens einem aus der Gruppe 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, und 1,1-Bis-(4-hydroxyphenyl)-3,3,5-trimethylcyclohexan, sowie den Diphenolen (I) bis (III) 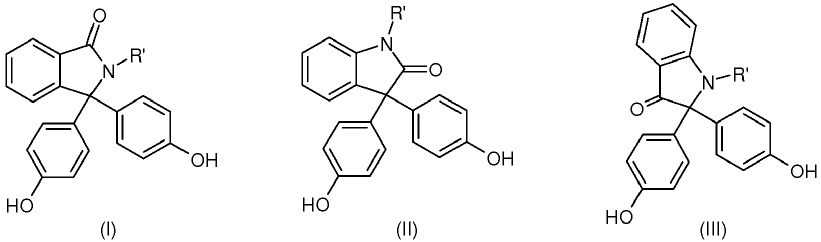 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Diphenole sind ausgewählt aus mindestens einem aus der Gruppe bestehend aus 2,2-Bis-(4-hydroxyphenyl)-propan (Bisphenol A), 2,2-Bis-(3,5-dimethyl-4-hydroxyphenyl)-propan, 1,1 -Bis-(4-hydroxyphenyl)-cyclohexan, 1,1-Bis-(4-hydroxyphenyl)-3,3,5-trimethylcyclohexan, Dimethyl-Bisphenol A sowie den Diphenolen der Formeln (I), (II) und/oder (III).

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Geeignete Kohlensäurederivate sind beispielsweise Phosgen oder Diphenylcarbonat.

Geeignete Kettenabbrecher, die bei der Herstellung der erfindungsgemäß verwendeten Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Bevorzugte Herstellungsweisen der erfindungsgemäß zu verwendenden Polycarbonate, einschließlich der Polyestercarbonate, sind das bekannte Grenzflächenverfahren und das bekannte Schmelzumesterungsverfahren (vgl. z. B. WO 2004/063249 A1, WO 2001/05866 A1, WO 2000/105867, US-A 5,340,905, US-A 5,097,002, US-A 5,717,057).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan sowie Copolycarbonate auf Basis der beiden Monomere Bisphenol A und 1,1-Bis-(4-hydroxyphenyl)-3,3,5-trimethylcyclohexan. Ebenso bevorzugt sind siloxanhaltige Polycarbonate wie oben beschrieben, besonders bevorzugt aus Dimethylsiloxanen mit Bisphenol A als Monomerbausteine.

Die Polycarbonate, bis auf die siloxanhaltigen Polycarbonate, deren Molekulargewicht bei der Beschreibung der siloxanhaltigen Polycarbonate angegeben ist, weisen bevorzugt ein gewichtsmittleres Molekulargewicht Mw von 15.000 g/mol bis 40.000 g/mol, besonders bevorzugt von 18.000 g/mol bis 35.000 g/mol, ganz besonders bevorzugt von 22.000 g/mol bis 32.000 g/mol auf, gemessen über Gelpermeationschromotographie in Anlehnung an DIN 55672-1:2016-03 unter Verwendung einer Bisphenol A Polycarbonat-Kalibrierung und Dichlormethan als Elutionsmittel, nach der Methode 2301-0257502-09D (aus dem Jahre 2009 in deutscher Sprache) des Unternehmens Currenta GmbH & Co. OHG, Leverkusen. Ebenso bevorzugt erfolgt die Molekulargewichtsbestimmung mit einem PSS SECcurity System; Polycarbonat-Kalibrierung, Dichlormethan als Elutionsmittel, Säule 1 (PL-PC5) mit einer Konzentration von 2 g/l, Flussrate 1,0 ml/min bei einer Temperatur von 30 °C unter der Verwendung einer UV- und/oder RI-Detektion.

Die **Siloxan-haltigen Polycarbonate** (im Folgenden auch als SiCoPC bezeichnet) betreffen Blockcokondensate mit folgenden Struktureinheiten: 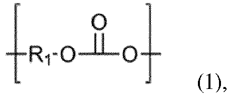
wobei R1 ein divalenter substituierter oder unsubstituierter aromatischer Rest, ein divalenter linearer oder cyclischer aliphatischer Rest ist
oder die Struktureinheit (1) eine Mischung aus Bausteinen ist, wobei R1 ein divalenter substituierter oder unsubstituierter aromatischer Rest bzw. R1 ein divalenter linearer oder cyclischer aliphatischer Rest ist. Der Anteil an aromatischen R1-Resten beträgt bevorzugt 60 - 100 Gew.-% und der Anteil an aliphatischen Resten 0 - 40 Gew.-%, bezogen auf die Summe der eingesetzten Diphenole der Formel (3) in Gew.-%
und 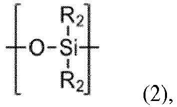 wobei R2 unabhängig voneinander ein linearer oder verzweigter aliphatischer Rest, bevorzugt C₁- bis C₁₂-Alkyl, besonders bevorzugt C₁- bis C₄-Alkyl, insbesondere Methyl, oder ein substituierter oder unsubstituierter aromatischer Rest, bevorzugt Phenyl, ist.

Ganz besonders bevorzugte Struktureinheiten (2) sind Dimethylsiloxan-, oder Diphenylsiloxan-, Methyl/Phenylsiloxan- oder Mischungen aus Dimethylsiloxan- und Diphenylsiloxaneinheiten.

In der Struktureinheit (1) ist R1 bevorzugt von Dihydroxyarylverbindungen abgeleitet, welche der Formel (3) entsprechen:

HO-Z-OH (3),

in welcher
Z ein aromatischer Rest mit 6 bis 30 C-Atomen ist, der einen oder mehrere aromatische Kerne enthalten kann, substituiert sein kann und aliphatische Reste bzw. Alkylaryle oder Heteroatome als Brückenglieder enthalten kann.

Bevorzugt steht Z in Formel (3) für einen Rest der Formel (3a) 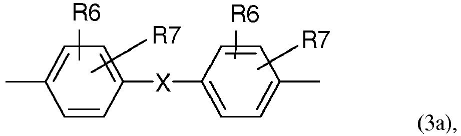 in der
R6 und R7 unabhängig voneinander für H, C₁- bis C₁₈-Alkyl, C₁- bis C₁₈-Alkoxy, Halogen wie Cl oder Br oder für jeweils gegebenenfalls substituiertes Aryl- oder Aralkyl, bevorzugt unabhängig voneinander für H oder C₁- bis C₁₂-Alkyl, besonders bevorzugt für H oder C₁-bis C₈-Alkyl und ganz besonders bevorzugt unabhängig voneinander für H oder Methyl stehen, und
X für -CO-, -O- , -S-, C₁- bis C₆-Alkylen, C₂- bis C₅-Alkyliden, C₆- bis C₁₀-Cycloalkyliden oder für C₆- bis C₁₂-Arylen, welches gegebenenfalls mit weiteren Heteroatome enthaltenden aromatischen Ringen kondensiert sein kann, steht.

Bevorzugt steht X für C₁- bis C₅-Alkylen, C₂- bis Cs-Alkyliden, C₆- bis C₉-Cyclohexyliden, -O- , -SO- , -CO- , -S- , -SO₂-, besonders bevorzugt für Isopropyliden, 3,3,5-Trimethylcyclohexyliden oder -O-, insbesondere für Isopropyliden.

Für die Herstellung der erfindungsgemäßen SiCoPCs geeignete Diphenole der Formel (3) sind beispielsweise Hydrochinon, Resorcin, Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, [alpha],[alpha]'-Bis-(hydroxyphenyl)-diisopropylbenzole sowie deren alkylierte, kernalkylierte und kernhalogenierte Verbindungen.

Ferner bevorzugte Diphenole der Formel (3) sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl-4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethy1-4-hydroxyphenyl)-2-propyl]-benzol, 1,1-Bis-(4-hydroxyphenyl)-cyclohexan und 1,1-Bis-(4-hydroxyphenyl)-3,3,5-trimethylcyclohexan.

Besonders bevorzugte Diphenole der Formel (3) sind 2,2-Bis-(4-hydroxyphenyl)-propan (BPA), Hydrochinon, 1,1-Bis-(4-hydroxyphenyl)-3,3,5-trimethylcyclohexan und 2,2-Bis-(3-methyl, 4-hydroxyphenyl)-propan.

Diese und weitere geeignete Diphenole sind kommerziell erhältlich und z. B. in "H. Schnell, Chemistry and Physics of Polycarbonates, Interscience Publishers, New York 1964, S. 28 ff; S. 102 ff" , und in "D. G. Legrand, J. T. Bendler, Handbook of Polycarbonate Science and Technology, Marcel Dekker New York 2000, S. 72 ff." beschrieben.

In einer Ausführungsform kann der Siloxanblock folgende Struktur (4) haben 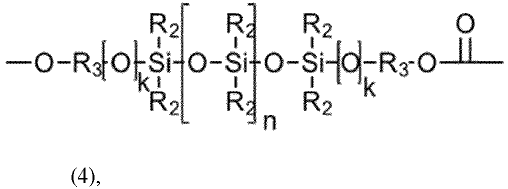 wobei R2 die oben genannte Bedeutung hat,
n eine durchschnittliche Zahl von 10 bis 400, bevorzugt 10 bis 100, besonders bevorzugt 15 bis 50, ist
und k für 0 oder 1 steht.

R3 umfasst unabhängig voneinander folgende Strukturelemente (5) oder (6) 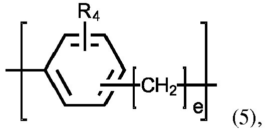
wobei R4 unabhängig voneinander Wasserstoff, Halogen und/oder jeweils ein C₁- bis C₁₀-, bevorzugt ein C₁- bis C₄-, linearer oder verzweigter, unsubstituierter oder ein- bis vierfach substituierter Alkylrest oder Alkoxyrest ist, bevorzugt sind die Alkyl- und Alkoxyreste unsubstituiert, insbesondere bevorzugt ist R4 Wasserstoff,
e 0 oder eine natürliche Zahl von 2 bis 12, bevorzugt 2 bis 6, ist, wobei im Falle, dass e gleich 0 ist, k gleich 1 ist;
oder Strukturelement der Formel (6) 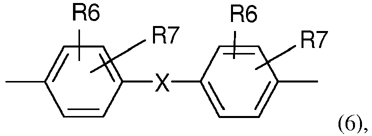 wobei R6, R7 und X die bei Formel (3a) angegebenen Bedeutungen haben.

Beispielsweise und bevorzugt kann der Siloxanblock folgende Strukturen umfassen: 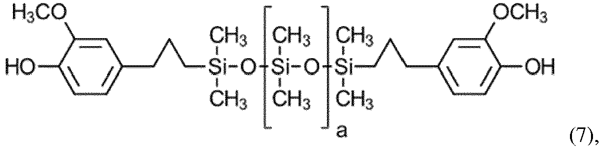 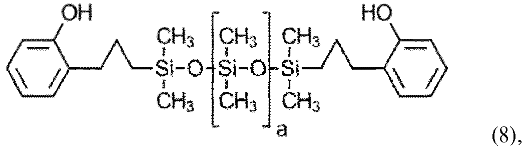 wobei a in den Formeln (7) und (8) für eine durchschnittliche Zahl von 10 bis 400, bevorzugt 10 bis 100 und besonders bevorzugt für 15 bis 50, steht.

In einer weiteren Ausführungsform können die oben genannten Siloxanblöcke einfach oder mehrfach über Terephthalsäure oder Isophthalsäure verknüpft sein zu folgenden beispielhaft gezeigten Strukturelementen: 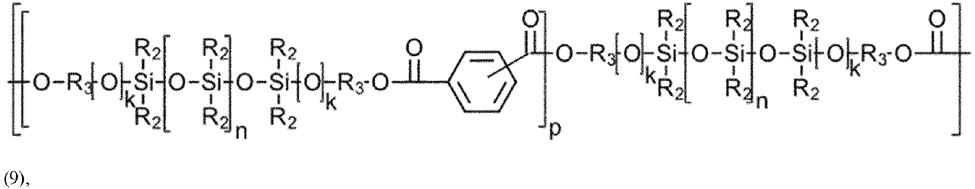 wobei p für 0 oder 1 steht,
R2, R3, n und k die oben bei dem Strukturelement (4) angegebenen Bedeutungen haben.

Entsprechende Siloxanblöcke zur Umsetzung mit Polycarbonat oder zur Umsetzung mit Diphenolen der Formel (3) oder (3a) mit Phosgen oder Diarylc weisen jeweils terminal phenolische OH Gruppen auf, d.h. 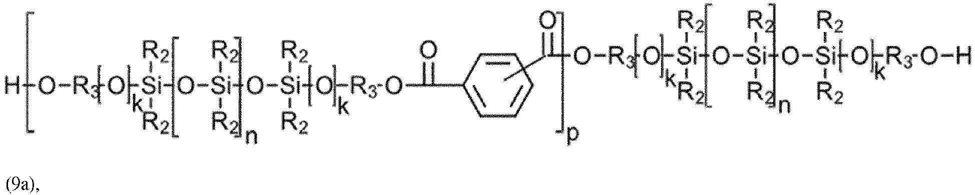 wobei R2, R3, n, k und p die bei dem Strukturelement (9) angegebenen Bedeutungen haben.

Bevorzugte Siloxanblöcke sind Hydroxyaryl-terminiertes Polysiloxan und entsprechen der Formel (10)

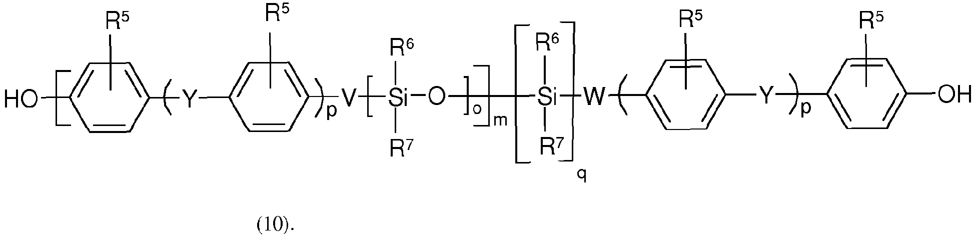

In der allgemeinen Formel (10) steht R⁵ für Wasserstoff oder C₁- bis C₄-Alkyl, C₁- bis C₄-Alkoxy, vorzugsweise für Wasserstoff oder Methyl, Methyloxy, be bevorzugt für Wasserstoff.

R⁶ und R⁷ stehen unabhängig voneinander für Aryl, bevorzugt Phenyl, C₁- bis C₄-Alkyl, vorzugsweise für Methyl, insbesondere für Methyl.

Y steht für eine Einfachbindung, -CO-, -O-, C₁- bis C₅-Alkylen, C₂- bis C₅-Alkyliden oder für einen C₅- bis C₆-Cycloalkylidenrest, der ein- oder mehrfach mit C₁- bis C₄-Alkyl substituiert sein kann, bevorzugt für eine Einfachbindung, -O-, Isopropyliden oder für einen C₅- bis C₆-Cycloalkylidenrest, der ein- oder mehrfach mit C₁- bis C₄-Alkyl substituiert sein kann, und insbesondere für Isopropyliden.

V steht für Sauerstoff, C₁- bis C₆-Alkylen oder C₂- bis C₅-Alkyliden, bevorzugt für eine Einfachbindung, Sauerstoff, C₃-Alkylen, insbesondere Sauerstoff oder Isopropyliden.

W steht für eine Einfachbindung, S, C₁- bis C₆-Alkylen oder C₂- bis Cs-Alkyliden, bevorzugt für eine Einfachbindung, C₃-Alkylen oder Isopropyliden, wobei W keine Einfachbindung ist, wenn q für 1steht.

p und q stehen unabhängig voneinander jeweils für 0 oder 1.

o steht für eine durchschnittliche Anzahl von Wiederholungseinheiten von 10 bis 400, bevorzugt 10 bis 100, besonders bevorzugt von 15 bis 50, und

m steht für eine durchschnittliche Zahl von 1 bis 10, bevorzugt von 1 bis 6 und besonders bevorzugt von 1,5 bis 5.

Insbesondere bevorzugt sind Siloxane der Formeln (11) und (12) 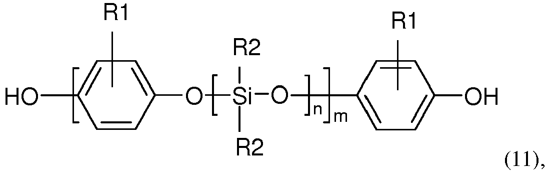 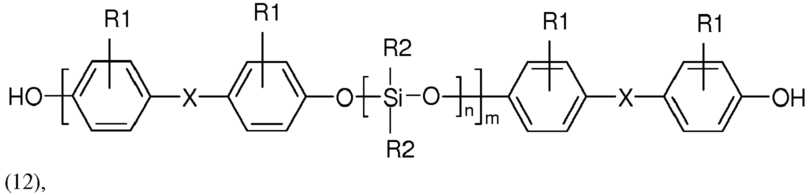
wobei R1 für H, Cl, Br oder C₁- bis C₄-Alkyl, vorzugsweise für H oder Methyl, steht und insbesondere bevorzugt für Wasserstoff steht,
R2 für Aryl oder C₁- bis C₄-Alkyl, bevorzugt für Methyl, steht,
X für eine Einfachbindung, -SO₂-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht. Bevorzugt steht X für eine Einfachbindung, Isopropyliden, 3,3,5-Trimethylcyclohexyliden oder Sauerstoff, und ganz besonders bevorzugt für Isopropyliden,
n steht für eine durchschnittliche Zahl von 10 bis 400, bevorzugt 10 bis 100, besonders bevorzugt 10 bis 50,
m steht für eine durchschnittliche Zahl von 1 bis 10, bevorzugt von 1 bis 6 und insbesondere bevorzugt von 1,5 bis 5. Das Molekulargewicht der Siloxanblöcke beträgt 3000 g/mol bis 20.000 g/mol, bevorzugt 3500 g/mol bis 15.000 g/mol, bestimmt mittels Gelpermeationschromatographie (GPC) und Polycarbonat aus Bisphenol A als Diphenol als Standar, wie oben beschrieben.

Die Herstellung der Siloxanblöcke ist prinzipiell bekannt und kann nach Verfahren wie beispielsweise in US 2013/0267665 A1 beschrieben hergestellt werden.

Die Herstellung von Polycarbonaten ist ebenfalls bekannt. Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Bevorzugte Herstellungsweisen für Polycarbonate sind das bekannte Grenzflächenverfahren und das bekannte Schmelzumesterungsverfahren (z. B. WO 2004/063249 A1, WO 2001/05866 A1, WO 2000/105867, US-A 5,340,905, US 5,097,002, US-A 5,717,057).

Der Gehalt an Siloxanblöcken im SiCoPC beträgt größer 0, bevorzugt 0,5 bis 40 Gew.-%, bevorzugt 1 bis 20 Gew.-%, insbesondere bevorzugt 2 bis 15 Gew.-% und ganz besonders bevorzugt 2 bis 10 Gew.-%, jeweils bezogen auf die eingesetzten Siloxanblöcke und Polycarbonatblöcke. Entsprechend beträgt der Anteil der Polycarbonatblöcke im Blockcokondensat 60 bis kleiner 100 (bevorzugt 99,5) Gew.-%, bevorzugt 99 bis 80 Gew.-%, insbesondere bevorzugt 98 bis 85 Gew.-% und ganz besonders bevorzugt 98 bis 90 Gew.-%.

Die oben genannten Siloxanblöcke werden bevorzugt mit Polycarbonaten mit Molekulargewichten von 15.000 bis 27.000 g/mol, insbesondere bevorzugt von 17.000 bis 27.000 g/mol und insbesondere bevorzugt von 18.000 bis 26.500 g/mol (gemessen mittels GPC mit BPA-Polycarbonat als Standard, wie oben beschrieben) umgesetzt.

Die Diphenole zur Herstellung der Polycarbonate sind die oben genannten Struktureinheiten (3).

Dabei werden die einzelnen Komponenten (Siloxan-Block und Polycarbonat-Block) nach dem Reaktivextrusionsverfahren oder alternativ die Siloxanblöcke mit Diphenolen der Formel (3) mit Phosgen oder Diarylcarbonaten nach dem bekannten Phasengrenzflächenverfahren umgesetzt. Dieses Verfahren zur Polycarbonatsynthese ist mannigfaltig in der Literatur beschrieben; beispielhaft sei auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen. Die Umsetzung von Polyorganosiloxanen im Phasengrenzflächenverfahren ist z.B. in US 3821325 A beschrieben.

Die Herstellung der SiCoPCs kann in einem Reaktivextrusionsverfahren, wie es beispielsweise in WO 2015/052110 A1 beschrieben ist, erfolgen.

### Komponente B)

Erfindungsgemäß wird als Komponente B) unbeschlichteter Talk verwendet. Dies bedeutet, dass der Talk vor der Vermischung mit Komponente A) keine Schlichte aufweist.

Talk im Sinne der vorliegenden Erfindung ist bevorzugt ein Talk, welcher im Wesentlichen die gleiche chemische Zusammensetzung, Partikeldurchmesser, Porosität und/oder BET-Oberfläche aufweist, oder ein Talkgemisch.

Bei Talk handelt es sich im Allgemeinen um ein Schichtsilikat. Es kann beschrieben werden als Magnesiumsilikathydrat mit der allgemeinen chemischen Zusammensetzung Mg₃[Si₄O₁₀(OH)₂]. Unterschiedliche Talkarten enthalten jedoch unterschiedliche Verunreinigungen, so dass Abweichungen von dieser allgemeinen Zusammensetzung vorliegen können.

Der Talk oder das Talkgemisch ist erfindungsgemäß zum Zeitpunkt der Zugabe zur Komponente A) und C) unbeschlichtet. Im Sinne der vorliegenden Erfindung wird eine Schlichte als eine gezielte (chemi- oder physisorbierte) Anreicherung von Molekülen unterschiedlich von Talkum, insbesondere Mg₃[Si₄O₁₀(OH)₂], an der Oberfläche betrachtet. Bei unbeschlichtetem Talk handelt es sich somit um nicht oberflächen-behandelten Talk, d. h. nach der Gewinnung der Talkpartikel mit dem gewünschten Partikeldurchmesser und gegebenenfalls einer Kompaktierung wurde der Talk bevorzugt keinem weiteren Verfahrensschritt unterzogen, welcher die Oberfläche des Talks durch Chemisorption oder Physisorption gezielt verändert. Dies schließt jedoch nicht aus, dass unbeabsichtigt Verunreinigungen, Staub oder ähnliche Partikel während der weiteren Handhabung des Talks an Teile der Oberfläche gelangen, solange die Oberfläche des Talks nicht wesentlich ihre Eigenschaften, insbesondere in Bezug auf den pH-Wert, verliert. Erfindungsgemäß wird der Talk erst durch die Vermischung mit der Komponente C) beschlichtet.

Bevorzugt weist der Talk einen pH-Wert von 8 bis 10, besonders bevorzugt 8,5 bis 9,8, ganz besonders bevorzugt 9,0 bis 9,7 auf, wobei der pH-Wert bestimmt wird gemäß EN ISO 787-9:1995. Es ist zu beachten, dass die EN ISO 787-9:1995 auch die Möglichkeit der Zugabe von Ethanol oder anderen organischen Lösungsmitteln zur Verbesserung der Dispergierung des zu vermessenden Feststoffes erwähnt. Bevorzugt wird erfindungsgemäß nur destilliertes Wasser zur Bestimmung des pH-Wertes gemäß EN ISO 787-9:1995 eingesetzt.

Die Komponente B) weist bevorzugt einen Gehalt an Eisen(II)oxid und/oder Eisen(III)oxid von 0,2 bis 2,5 Gew.-%, besonders bevorzugt 0,3 bis 2,3 Gew.-%, ganz besonders bevorzugt von 0,3 bis 2,0 Gew.-% auf. Dieser Gehalt wird bevorzugt gemessen durch Röntgenfluoreszenz oder Atomabsorptionsspektroskopie. Es hat sich herausgestellt, dass der Gehalt an Eisenoxid im Talk einen Einfluss auf den Grad des Abbau des Polycarbonats aufweist. Im erfindungsgemäß angegebenen Gehaltsbereich an Eisenoxid wurden besonders gute Ergebnisse in Bezug auf die Verminderung des Abbaus des Polycarbonats erzielt.

Ebenso bevorzugt weist die Komponente B) einen Gehalt an Aluminiumoxid von 0,01 bis 0,5 Gew.-%, besonders bevorzugt von 0,05 bis 0,48 Gew.-%, ganz besonders bevorzugt von 0,15 bis 0,45 Gew.-% auf.

Die Komponente B) weist bevorzugt einen mittleren Partikeldurchmesser D₅₀ von 0,01 bis 9,5 µm auf, besonders bevorzugt 0,25 bis 8,00 µm, weiterhin bevorzugt 0,5 bis 6,00 µm und ganz besonders bevorzugt 0,5 µm bis kleiner oder gleich 3,0 µm auf, wobei der Partikeldurchmesser D₅₀ bestimmt wird durch Sedimentationsanalyse. Unter dem Mittelwert D₅₀ versteht der Fachmann einen mittleren Partikeldurchmesser, bei dem 50 % der Partikel kleiner sind als der definierte Wert. Bevorzugt wird der Partikeldurchmesser D₅₀ bestimmt gemäß ISO13317-3:2001.

Komponente B) weist bevorzugt eine BET-Oberfläche von 7,5 bis 20,0 m²/g, besonders bevorzugt von 9,0 bis 15,0 m²/g, ganz besonders bevorzugt 9,5 bis 14,0 m²/g auf. Die Bestimmung der Oberfläche nach Brunauer, Emmett und Teller mittels Gasadsorption ist dem Fachmann an sich bekannt. Bevorzugt wird die BET-Oberfläche gemäß ISO 4652:2012 bestimmt. Diese bevorzugte BET-Oberfläche wird besonders bevorzugt mit dem oben beschriebenen mittleren Partikeldurchmesser D₅₀ des Talks verbunden. Es hat sich herausgestellt, dass bei einer solchen Kombination die erfindungsgemäß eingesetzte Komponente B) optimal auf die erfindungsgemäß eingesetzte Komponente C) abgestimmt ist. Durch die spezielle Säurezahl und Molmasse der Komponente C) kann der Abbau des Polycarbonats, welcher durch die Komponente B) verursacht wird, minimiert werden, da unter diesen Bedingungen insbesondere auch die Poren des Talks für das Wachs C) zugänglich sind.

Besonders bevorzugt weist der Talk einen Talkgehalt von ≥ 96 Gew.-%, besonders bevorzugt ≥ 97 Gew.-%, ganz besonders bevorzugt ≥ 98 Gew.-% auf.

Ebenso ist es bevorzugt, dass der Talk einen Glühverlust bei 1050 °C von 5,0 bis 7,0 Gew.-%, besonders bevorzugt von 5,2 bis 6,5 Gew.-% und ganz besonders bevorzugt von 5,3 bis 6,2 Gew.-% aufweist. Der Glühverlust wird bevorzugt mittels DIN51081:2002 bestimmt.

Der Talk oder das Talkgemisch gemäß Komponente B) liegt bevorzugt kompaktiert vor.

### Komponente C)

Die Komponente C) im Sinne der vorliegenden Erfindung ist ein anhydridmodifiziertes alpha-Olefin-Polymer mit einer Säurezahl von mindestens 30 mg KOH/g und einem mittleren Molekulargewicht Mw von 4.000 bis 40.000 g/mol. Dabei kann es sich auch um eine Mischung verschiedener Polymere handeln, welche die Merkmale gemäß Komponente C) erfüllen.

Das alpha-Olefin-Polymer enthält vorzugsweise mindestens einen Baustein ausgewählt aus der Gruppe, bestehend aus Ethylen, 1-Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen sowie Gemische aus diesen. Besonders bevorzugt umfasst das alpha-Olefin-Polymer mindestens einen Baustein, welcher ausgewählt ist aus der Gruppe, bestehend aus Ethylen, 1-Propen, 1-Octen.

Bevorzugtes Anhydrid als weiterer Baustein zur Modifizierung ist ein ungesättigtes Carbonsäureanhydrid, welches vorzugsweise ausgewählt ist aus mindestens einem, ausgewählt aus der Gruppe, bestehend aus Maleinsäureanhydrid, Phthalsäureanhydrid, Fumarsäureanhydrid, Itaconsäureanhydrid. Besonders bevorzugt ist Maleinsäureanhydrid.

Das anhydridmodifizierte alpha-Olefin-Polymer ist bevorzugt kautschukfrei.

Bevorzugt umfasst das alpha-Olefin-Polymer (Komponente C)
Ca) 90,0-98,0 Gew.-%, vorzugsweise 92,0-97,5 Gew.-%, besonders bevorzugt 94,0-97,0 Gew.-% alpha-Olefin-Polymer und
Cb) 2,0-10,0 Gew.-%, vorzugsweise 2,5-8,0 Gew.-%, und besonders bevorzugt 3,0-6,0 Gew.-% Anhydrid.

Der olefinische Teil Ca) des alpha-Olefin-Polymers ist bevorzugt dadurch gekennzeichnet, dass
der Ethylenanteil 80,0-96,0 Gew.-%, bevorzugt 84,0-92,0 Gew.-%,
der Propylenanteil 2,0-10,0 Gew.-%, bevorzugt 4,0-8,0 Gew.-% und
der Octenanteil 2,0-10,0 Gew.-%, bevorzugt 4,0-8,0 Gew.-%, ist.

Ebenso bevorzugt besteht der olefinische Teil Ca) des alpha-Olefin-Polymers aus Propylen und/oder Ethylen. Weiterhin bevorzugt besteht der olefinische Teil Ca) des alpha-Olefin-Polymers aus Propylen.

Die Säurezahl des erfindungsgemäß eingesetzten Wachses der Komponente C) beträgt mindestens 30 mg KOH/g. Bevorzugt beträgt die Säurezahl 30 bis 110 mg KOH/g, besonders bevorzugt 40 bis 95 mg KOH/g. Die Säurezahl wurde von der Currenta GmbH mittels potentiometrischer Titration mit alkoholischer Kaliumhydroxid-Lösung gemäß DIN ISO 17025:2005 bestimmt.

Das mittlere Molekulargewicht Mw des anhydridmodifzierten alpha-Olefin-Polymers beträgt 4.000 bis 40.000 g/mol, bevorzugt 4.000 bis 32.000 g/mol, besonders bevorzugt 4.800 bis 25.000 g/mol. Das Molekulargewicht Mw wird bestimmt mittels Gelpermeationschromatographie in ortho-Dichlorbenzol bei 150 °C mit Polystyrolkalibrierung. Hierbei ist der angegebene Wert bevorzugt der Mittelwert aus einer Doppelbestimmung.

Bevorzugt beträgt bei kleineren Molekulargewichten von 4.000 bis 10.000 g/mol die Säurezahl 30 bis 65 mg, besonders bevorzugt 40 bis 60 mg KOH/g. Besonders bevorzugt beträgt das Molekulargewicht für die jeweils genannten Säurezahl von 30 mg bis 65 mg bzw. 40 bis 60 mg KOH/g 4.500 bis 8.000 g/mol und insbesondere 5.000 bis 7.000 g/mol.

Bevorzugt beträgt bei größeren Molekulargewichten von 12.000 bis 40.000 g/mol die Säurezahl 30 mg bis 100 mg KOH/g, insbesondere 35 mg bis 95 mg KOH/g. Besonders bevorzugt beträgt das Molekulargewicht für die jeweils genannten Säurezahl von 30 mg bis 100 mg bzw. 35 bis 95 mg KOH/g 12.000 bis 32.000 g/mol und insbesondere 15.000 bis 25.000 g/mol, ganz besonders bevorzugt 17.500 bis 23.000 g/mol.

Die Kombination der (Mindest)Säurezahl und Molmasse des Wachses C) wie oben angegeben ist besonders geeignet, um insbesondere die multiaxiale Schlagzähigkeit von aus den erfindungsgemäßen Zusammensetzungen hergestellten Formteilen zu optimieren.

### Zusammensetzung

In der erfindungsgemäßen Zusammensetzung sind die Mengen von B) und C) vor der Vermischung der Komponenten A) bis C) so aufeinander abgestimmt, dass pro 10 Gewichtsteile der Komponente B) 0,10 bis 1,4 Gewichtsteile der Komponente C) eingesetzt werden. Bevorzugt werden pro 10 Gewichtsteile der Komponente B) 0,2 bis 1,2, besonders bevorzugt 0,3 bis 1,1 Gewichtsteile der Komponente C), ganz besonders bevorzugt 0,4 bis 1,0 Gewichtsteile der Komponente C) eingesetzt.

Bevorzugt enthält die erfindungsgemäße Zusammensetzung
5,00 bis 45,00 Gew.-% der Komponente B).

Besonders bevorzugt enthält die Zusammensetzung 10,00 bis 42,00 Gew.-%, ganz besonders bevorzugt 13,00 bis 40,00 Gew.-% der Komponente B). Die Menge der Komponente C) ergibt sich aus den oben angegebenen Mengen pro 10 Gewichtsteile Komponente B).

Die Menge der Komponente B) beträgt für hohe multiaxiale Schlagzähigkeit in Kombination mit guter Verstärkung (E-Modul) bevorzugt 5,00 bis 31,00 Gew.-%, besonders bevorzugt 8,00 bis 25,00 Gew.-%. Die Mengen der Komponenten A) bis C) beziehen sich jeweils auf die Gesamtzusammensetzung.

Für gute multiaxiale Schlagzähigkeit in Kombination mit guter Wärmeleitfähigkeit beträgt die Menge der Komponente B) besonders bevorzugt 18,00 bis 40,00 Gew.-% der Komponente B).

Die Zusammensetzung ist frei von Pfropfpolymerisaten und Polyestern, bevorzugt von von Komponente C) verschiedenen Impact Modifiern.

Unter "Pfropfpolymerisaten" werden insbesondere Pfropfpolymerisate mit kautschukelastischen Eigenschaften verstanden, die im Wesentlichen aus mindestens zwei der nachfolgenden Monomere erhältlich sind: Chloropren, 1,3-Butadien, Isopren, Styrol, Acrylnitril, Ethylen, Propylen, Vinylacetat und (Meth)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind. Pfropfpolymerisate können partiell vernetzt sein und Gelgehalte (gemessen in Toluol) von über 20 Gew.-% aufweisen, vorzugsweise über 40 Gew.-%, insbesondere über 60 Gew.-%, wobei der Gelgehalt bei 25°C in einem geeigneten Lösungsmittel bestimmt wird (M. Hoffmann, H. Krömer, R. Kuhn, Polymeranalytik I und II, Georg Thieme-Verlag, Stuttgart 1977).

Pfropfpolymerisate sind beispielsweise Pfropfpolymerisate aus:
a.i) 5 bis 95 Gew.-Teile, vorzugsweise 30 bis 80 Gew.-Teile, einer Mischung aus
a.i.1) 50 bis 95 Gew.-Teilen Styrol, α-Methylstyrol, methylkemsubstituiertem Styrol, C₁- bis C₈-Alkylmethacrylat, insbesondere Methylmethacrylat, C₁- bis C₈-Alkylacrylat, insbesondere Methylacrylat, oder Mischungen dieser Verbindungen
   und
a.i.2) 5 bis 50 Gew.-Teilen Acrylnitril, Methacrylnitril C₁- bis C₈-Alkylmethacrylaten, insbesondere Methylmethacrylat, C₁- bis C₈-Alkylacrylat, insbesondere Methylacrylat, Maleinsäureanhydrid, C₁- bis C₄-Alkyl- bzw. -Phenyl-N-substituierte Maleinimide oder Mischungen dieser Verbindungen auf
a.ii) 5 bis 95 Gew.-Teile, vorzugsweise 20 bis 70 Gew.-Teilen einer kautschukhaltigen Pfropfgrundlage.

Pfropfpolymere sind insbesondere solche mit einer Pfropfgrundlage auf Basis eines Polybutadienkautschuks.

Pfropfpolymerisate sind z.B. mit Styrol und/oder Acrylnitril und/oder (Meth- )Acrylsäurealkylestern gepfropfte Polybutadiene, Butadien/Styrol-Copolymerisate und Acrylatkautschuke; d.h. Copolymerisate der in der DEOS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Pfropfpolymerisate sind insbesondere auch solche, die durch Pfropfreaktion von
I. mindestens einem (Meth-)Acrylsäureester oder einem Gemisch aus Acrylnitril oder (Meth-)Acrylsäureester und Styrol auf
II. einem Butadien-Polymerisat mit Butadienresten als Pfropfgrundlage
   erhältlich sind.

(Meth-)Acrylsäureester I sind Ester der Acrylsäure oder Methacrylsäure und einwertiger Alkohole mit 1 bis 18 C-Atomen, insbesondere Methacrylsäuremethylester, -ethylester und - propylester.

Die Pfropfgrundlage II kann neben Butadienresten auch Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Eine Pfropfgrundlage II besteht beispielsweise aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch Polymerisation der Pfropfmonomeren in Gegenwart der Pfropfgrundlage gewonnen werden.

Pfropfpolymerisate sind z.B. auch Pfropfpolymerisate aus
(a) Acrylatkautschuk als Pfropfgrundlage und
(b) einem polymerisierbaren, ethylenisch ungesättigten Monomeren, dessen bzw. deren in Abwesenheit von a) entstandenen Homo- bzw. Copolymerisate als Pfropfmonomere.

Die Acrylatkautschuke (a) des Pfropfpolymerisats sind insbesondere Polymerisate aus Acrylsäurealkylestern, gegebenenfalls mit anderen polymerisierbaren, ethylenisch ungesättigten Monomeren.

Polymerisierbare Acrylsäureester sind C₁- bis C₈-Alkylester, beispielsweise Methyl-, Ethyl-, n-Butyl-, n-Octyl- und 2-Ethylhexylester sowie Mischungen dieser Monomeren.

Zur Vernetzung können Monomere mit mehr als einer polymerisierbaren Doppelbindung copolymerisiert werden.

Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-C₁- bis -C₆-alkylether, Methylmethacrylat, Butadien.

Beispiele für entsprechende Impact Modifier sind ABS (Acrylnitril-Butadien-Styrol), SBR (Styrol-Butadien-Rubber) und SAN (Styrol-Acrylnitril).

Impact Modifier sind auch Vinyl(co)polymerisate.

Pfropfgrundlagen sind auch Silikonkautschuke.

Impact-Modifier sind auch Kern-Schale-Systeme, z.B. Silikon-Acryl-Schlagzähmodifizierer, etwa mit Silikonelastomer-Kern und MMA-Copolymer-Schale, wie Metablen S-2001.

Impact Modifier sind auch höhermolekulare, ggf. funktionalisierte, Polyolefine, sowohl Homo- als auch Copolymere, die von Komponente C) verschieden sind. Bei diesen erfolgt die Funktionalisierung z.B. mittels aromatischer Monovinyl-Monomere, Acrylsäuren bzw. Methacrylsäuren und/oder deren Estern, konjugierten Dienen.

Als Impact Modifier üblicherweise verwendete Polyester sind im weitesten Sinne als Kondensate aus Dicarbonsäuren und Diolen (Dialkoholen) darstellbar, insbesondere Polyethylenterephthalat, Polybutylenterephthalat sowie Polyethylennaphthalat oder der Copolyester Tritan der Eastman Chemical Company.

Besonders bevorzugt besteht die Zusammensetzung im Wesentlichen aus den Komponenten A) bis C), wobei aber übliche Additive, die im Folgenden aufgeführt sind, enthalten sein können, und grundsätzlich auch weitere Bestandteile, die sich nicht negativ auf die gewünschten Eigenschaften, insbesondere die multiaxiale Schlagzähigkeit auswirken. Ganz besonders bevorzugt besteht die Zusammensetzung aus den Komponenten A) bis C) sowie den unten genannten Additiven und ist also insbesondere frei von von Komponente C) verschiedenen Impact Modifiern. "Von Komponente C) verschieden" ist so bezeichnet, da anhydridmodifierte alpha-Olefin-Polymere in der Literatur teilweise als Impact Modifier bezeichnet werden, dann üblicherweise aber in höheren Mengen und/oder mit höherem mittleren Molekulargewicht eingesetzt werden.

Die erfindungsgemäße Zusammensetzung umfasst bevorzugt mindestens ein Additiv, ausgewählt aus der Gruppe, bestehend aus Flammschutzmitteln, Antitropfmitteln, Thermostabilisatoren, Entformungsmitteln, Antioxidantien, UV-Absorbern, IR-Absorbern, Antistatika, optischen Aufhellern, Lichtstreumitteln, Farbmitteln. Dabei können diese weiteren Bestandteile vor der Vermischung der Komponenten A) bis C), bei der Vermischung der Komponenten A) bis C) oder nach der Vermischung der Komponenten A) bis C) hinzugegeben werden.

Die Additive sind optional bis zu 10,0 Gew.-%, bevorzugt zu 0,10 bis 8,0 Gew.-%, besonders bevorzugt zu 0,2 bis 3,0 Gew.-% in der erfindungsgemäßen Zusammensetzung enthalten, wobei sich diese Gewichtsprozente auf die Gesamtmasse der Zusammensetzung beziehen.

Solche Additive, wie sie üblicherweise Polycarbonaten zugesetzt werden, sind beispielsweise in EP-A 0 839 623, WO-A 96/15102, EP-A 0 500 496 oder im "Plastics Additives Handbook", Hans Zweifel, 5th Edition 2000, Hanser Verlag, München beschrieben.

Bevorzugte Entformungsmittel sind Ester aliphatischer langkettiger Carbonsäuren mit ein- oder mehrwertigen aliphatischen und/oder aromatischen Hydroxyverbindungen. Besonders bevorzugt sind Pentaerythrittetrastearat, Glycerinmonostearat, Stearylstearat und Propandioldistearat, bzw. Gemische daraus.

Bevorzugte UV-Stabilisatoren weisen eine möglichst geringe Transmission unterhalb 400 nm und eine möglichst hohe Transmission oberhalb von 400 nm auf. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, Ciba Spezialitätenchemie, Basel), 2-(2'-Hydroxy-5'-(tert.-octyl)-phenyl)-benzotriazol (Tinuvin® 329, Ciba Spezialitätenchemie, Basel), 2-(2'-Hydroxy-3'-(2-butyl)-5'-(tert.butyl)-phenyl)-benzotriazol (Tinuvin® 350, Ciba Spezialitätenchemie, Basel), Bis-(3-(2H-benztriazolyl)-2-hydroxy-5-tert.-octyl)methan, (Tinuvin® 360, Ciba Spezialitätenchemie, Basel), (2-(4,6-Diphenyl-1,3,5-triazin-2-yl)-5-(hexyloxy)-phenol (Tinuvin® 1577, Ciba Spezialitätenchemie, Basel), sowie der Benzophenone 2,4-Dihydroxy-benzophenon (Chimasorb® 22, Ciba Spezialitätenchemie, Basel) und 2-Hydroxy-4-(octyloxy)-benzophenon (Chimassorb® 81, Ciba, Basel), 2-Cyano-3,3-diphenyl-2-propensäure-2-ethylhexylester, 2,2-Bis[[(2-cyano-1-oxo-3,3-diphenyl-2-propenyl)oxy]-methyl] -1,3-propandiylester (9CI) (Uvinul® 3030, BASF AG Ludwigshafen), 2-[2-Hydroxy-4-(2-ethylhexyl)oxy]phenyl-4,6-di(4-phenyl)phenyl-1,3,5-triazin (CGX UVA 006, Ciba Spezialitätenchemie, Basel) oder Tetraethyl-2,2'-(1,4-phenylen-dimethyliden)-bismalonat (Hostavin® B-Cap, Clariant AG).

Besonders bevorzugte spezielle UV-Stabilisatoren sind beispielsweise Tinuvin® 360, Tinuvin® 350, Tinuvin® 329, Hostavin® B-CAP, besonders bevorzugt TIN 329 und Hostavin® B-Cap. Es können auch Mischungen dieser Ultraviolett-Absorber eingesetzt werden.

Gemäß einer speziellen Ausführungsform der Erfindung enthält die Zusammensetzung Ultraviolett-Absorber in einer Menge von 0 ppm bis 6000 ppm, bevorzugt 500 ppm bis 5000 ppm, und weiter bevorzugt 1000 ppm bis 2000 ppm, bezogen auf die Gesamtzusammensetzung.

Geeignete Farbmittel können Pigmente, auch anorganische Pigmente, Ruß und/oder Farbstoffe sein. Füllstoffe verschieden von Komponente B) können ebenfalls zugesetzt werden, sofern sie nach Art und Menge das Eigenschaftsniveau der vorliegenden Erfindung nicht beeinträchtigen. Als anorganische Füllstoffe kommen insbesondere Titandioxid, im allgemeinen in einer Menge von 0 bis 2,5 Gew.-%, bezogen auf die Summe der Gesamtzusammensetzung, oder Bariumsulfat in Betracht.

Darüber hinaus können weitere Bestandteile zugesetzt werden, die nach Art des Bestandteils und Menge das Eigenschaftsniveau der vorliegenden Erfindung nicht beeinträchtigen.

Die Herstellung der erfindungsgemäßen Polymer-Zusammensetzungen, enthaltend die vermischten Komponenten A) bis C) und optional Additive sowie weitere Bestandteile, erfolgt gegebenenfalls unter Verwendung von Pulvervormischungen, solange die Komponenten B) und C) tatsächlich erst in der Schmelze der Komponente A) vermischt werden. Unter dieser Voraussetzung können auch Vormischungen aus Granulaten oder Granulaten und Pulvern mit den erfindungsgemäßen Zusätzen verwendet werden. Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind. Insbesondere können hierbei die weiteren Bestandteile der erfindungsgemäßen Zusammensetzung durch bekannte Verfahren oder als Masterbatch eingebracht werden. Die Verwendung von Masterbatchen ist insbesondere zum Einbringen von Additiven und weiteren Bestandteilen bevorzugt, wobei insbesondere Masterbatche auf Basis der jeweiligen Polymermatrix verwendet werden.

Die erfindungsgemäße Zusammensetzung kann beispielsweise extrudiert werden. Nach der Extrusion kann das Extrudat abgekühlt und zerkleinert werden. Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Es hat sich insbesondere herausgestellt, dass die erfindungsgemäße Zusammensetzung besonders geeignet ist für die Herstellung von Extrudaten, bevorzugt für die Extrusion von Profilen und Platten.

### Verfahren

Ein weiterer Aspekt der vorliegenden Erfindung ist ein Verfahren zur Beschlichtung von Talk B) durch mindestens ein anhydridmodifiziertes alpha-Olefin-Polymer, wie oben als Komponente B) beschrieben, welches dadurch gekennzeichnet ist, dass die Beschlichtung während der Vermischung des Talks oder Talkgemisches B) mit mindestens einem Polycarbonat und/oder Copolycarbonat gemäß der oben beschriebenen Komponente A) in der Schmelze erfolgt. Die Komponente C) kann dabei entweder gleichzeitig mit der Komponente B) zugeführt werden, oder die Komponente C) wird der Komponente A) zugegeben, bevor die Zugabe der Komponente B) erfolgt.

Dies bedeutet, dass, wie bereits oben näher erläutert, die Komponente A) bei der Vermischung mit den Komponenten B) und C) zumindest teilweise in der Schmelze vorliegt. Bei dem erfindungsgemäßen Verfahren können die Komponenten A) bis C), wie sie bereits oben näher erläutert wurden, in sämtlichen Bevorzugungen und Kombinationen eingesetzt werden. Bevorzugt dient das erfindungsgemäße Verfahren zur Herstellung der erfindungsgemäßen Zusammensetzung. Dabei ist es besonders bevorzugt, dass die Mengen von B) und C) so aufeinander abgestimmt sind, dass pro 10 Gewichtsteile der Komponente B) 0,10 bis 1,4 Gewichtsteile der Komponente C) eingesetzt werden. Weitere bevorzugte Ausführungsformen sind bereits oben beschrieben und sind auch hier anwendbar.

Es hat sich überraschenderweise herausgestellt, dass eine in-situ Beschlichtung, d. h. die Anlagerung des Wachses C) an die Oberfläche des Talks B) erst während der Vermischung mit dem Polycarbonat A), trotz der Tatsache, dass der unbeschlichtete Talk C) somit zumindest teilweise mit dem Polycarbonat A) in Kontakt kommt, ausreichend ist, um einen wesentlichen Abbau des Polycarbonats A) zu vermeiden. Hierbei spiegelt sich die Tatsache, dass kein wesentlicher Abbau stattfindet, insbesondere in den hervorragenden mechanischen Eigenschaften der Zusammensetzung und der resultierenden Formkörper wider. Insgesamt kann somit zur Erzeugung der erfindungsgemäßen Zusammensetzung und Formteile ein Verfahrensschritt gespart werden, da eine vorherige Beschlichtung/Behandlung des Talks nicht notwendig ist. Dadurch wird das erfindungsgemäße Verfahren besonders effizient und kostengünstig.

In einem weiteren Aspekt der vorliegenden Erfindung wird ein Verfahren zur Verbesserung der multiaxialen Schlagzähigkeit gemäß DIN EN ISO 6603-2:2002 einer Zusammensetzung, umfassend A) ein Polycarbonat und B) Talk bereitgestellt, wobei das Verfahren den Schritt der Beschlichtung der Komponente B) mit einem anhydridmodifizierten alpha-Olefin-Polymer C) mit einer Säurezahl von mindestens 30 mg KOH/g und einem mittleren Molekulargewicht Mw von 4000 bis 40.000 g/mol, wobei das mittlere Molekulargewicht Mw bestimmt wird mittels Gelpermeationschromatographie in ortho-Dichlorbenzol bei 150 °C mit Polystyrolkalibrierung, umfasst und wobei die Mengen von B) und C) so aufeinander abgestimmt sind, dass pro 10 Gewichtsteile der Komponente B) 0,10 bis 1,4 Gewichtsteile der Komponente C) eingesetzt werden. Wie bereits oben näher erläutert, konnte überraschenderweise herausgefunden werden, dass die Verwendung eines speziellen Wachses, bevorzugt in Kombination mit einem speziellen, oben näher beschriebenen Talk B), zu Formteilen mit einer verbesserten multiaxialen Schlagzähigkeit führt.

Bei dem erfindungsgemäßen Verfahren können die Komponenten A) bis C), wie sie bereits oben näher erläutert wurden, in sämtlichen Bevorzugungen und Kombinationen eingesetzt werden. Bevorzugt dient das erfindungsgemäße Verfahren zur Herstellung der erfindungsgemäßen Zusammensetzung. Die Beschlichtung des Talks oder Talkgemisches B) mit mindestens einem Polycarbonat A) erfolgt in der Schmelze.

Ebenso wird in einem weiteren Aspekt der vorliegenden Erfindung ein Verfahren zur Erhöhung der Fließfähigkeit einer Zusammensetzung, umfassend ein Polycarbonat A) bereitgestellt, wobei das Verfahren den Schritt der Vermischung von Talk B) und einem anhydridmodifizierten alpha-Olefin-Polymer C) mit einer Säurezahl von mindestens 30 mg KOH/g, bestimmt mittels potentiometrischer Titration mit alkoholischer Kaliumhydroxid-Lösung gemäß DIN ISO 17025:2005, und einem mittleren Molekulargewicht Mw von 4000 bis 40.000 g/mol, wobei das mittlere Molekulargewicht Mw bestimmt wird mittels Gelpermeationschromatographie in ortho-Dichlorbenzol bei 150 °C mit Polystyrolkalibrierung, mit einem Polycarbonat A) umfasst. Bei dem erfindungsgemäßen Verfahren können die Komponenten A) bis C), wie sie bereits oben näher erläutert wurden, in sämtlichen Bevorzugungen und Kombinationen eingesetzt werden. Bevorzugt dient das erfindungsgemäße Verfahren zur Herstellung der erfindungsgemäßen Zusammensetzung. Insbesondere in Bezug auf den Schritt der Vermischung wird auf die Ausführungen oben verwiesen. Überraschend wurde gefunden, dass bei Zugabe der Komponente B) in Kombination mit Komponente C) keine Verminderung der Fließfähigkeit der erfindungsgemäßen thermoplastischen Formmasse zu beobachten war. Im Gegenteil übertraf die Fließfähigkeit der erfindungsgemäßen thermoplastischen Formmasse die Fließfähigkeit der reinen Komponente A). Dies ist für den Fachmann besonders überraschend, da die Zugabe eines Füllstoffs wie Talk normalerweise mit einer Herabsetzung der Fließfähigkeit verbunden ist.

In einem weiteren Aspekt betrifft die vorliegende Erfindung ein Formteil, welches die erfindungsgemäße Zusammensetzung umfasst. Bevorzugt handelt es sich bei dem Formteil um Gehäuse oder Gehäuseteile im elektronischen Bereich, Gehäuse für mobile Elektronik, Schutzausrüstungsteile oder Karosserieteile im Automobilbereich. Die erfindungsgemäßen Formteile zeichnen sich durch eine einzigartige Eigenschaftskombination intrinsischer Wärmeleitfähigkeit bei elektrischer Isolation, hoher Steifigkeit, hoher Zähigkeit, insbesondere bei multiaxialer Beanspruchung, verbesserter Fließfähigkeit und hoher Oberflächenqualität bei thermoplastischer Verarbeitung aus.

Ebenso stellt die vorliegende Erfindung die Verwendung der erfindungsgemäßen Zusammensetzung zur Herstellung eines Formteils bereit, wobei es sich bei dem Formteil um Gehäuse oder Gehäuseteile im elektronischen Bereich, Gehäuse für mobile Elektronik, Schutzausrüstungsteile oder Karosserieteile im Automobilbereich handelt.

Die Formteile sind für folgende Anwendungen geeignet: Fahrzeugteile oder Innenausbauteile für Kraftfahrzeuge, Busse, Lastwagen, Wohnmobile, Schienenfahrzeuge, Luftfahrzeuge, Wasserfahrzeuge oder sonstige Fahrzeuge, Abdeckplatten für den Bausektor, flächige Wandelemente, Trennwände, Wandschutz- und Kantenschutzleisten, Profile für Elektroinstallationskanäle, Kabelleiter, Stromschienenabdeckungen, Fenster-, Türprofile, Möbelteile, Verkehrsschilder.

Die folgenden Beispiele dienen der weiteren Erläuterung der Erfindung.

### BEISPIELE

### Verwendete Materialien:

Material A1: ein lineares Bisphenol-A-Polycarbonat mit einem MVR (300 °C/1,2 kg) von 19 cm³/(10 min) und einem mittleren Molekulargewicht M_{w} von ca. 24.000 g/mol der Covestro Deutschland AG.
Material A2: ein lineares Bisphenol-A-Polycarbonat mit einem MVR (300 °C/1,2 kg) von 9 cm³/(10 min) und einem mittleren Molekulargewicht M_{w} von ca. 28.000 g/mol der Covestro Deutschland AG.
Material A3: Polysiloxan-Polycarbonat-Blockcokondensat mit einem MVR (300 °C; 1,2 kg) von ca. 14 cm³/(10 min) und einem Polydimethylsiloxangehalt von ca. 5 Gew.-%; Lösungsviskosität ηᵣₑₗ 1,26. Der zur Herstellung des SiCoPC eingesetzte Block entspricht der Formel (11);

### Material 3: Herstellung des Polysiloxan-Polycarbonat-Blockcokondensats:

### Ausgangsstoffe:

### Polycarbonat:

Als Ausgangsstoff für die Reaktivextrusion wird lineares Bisphenol-A-Polycarbonat mit Endgruppen, basierend auf Phenol mit einem Schmelzvolumenindex von 59 - 62 cm³/(10 min) (gemessen bei 300 °C und 1,2 kg Belastung gemäß ISO 1133 (Jahr 2011)) eingesetzt. Dieses Polycarbonat enthält keine Additive wie UV-Stabilisatoren, Entformungsmittel oder Thermostabilisatoren. Die Darstellung des Polycarbonats erfolgte über einen Schmelzeumesterungsprozess, wie in DE 102008019503 beschrieben. Das Polycarbonat weist einen Gehalt an phenolischen Endgruppen von ca. 600 ppm auf.

### Siloxanblock:

Hydrochinon-terminiertes Polydimethylsiloxan der Formel (11) mit n von ca. 30 und m im Bereich von 3 bis 4 (R1 = H, R2 = Methyl), mit einem Hydroxy-Gehalt von 12 mg KOH/g und einer Viskosität von 370 mPa·s (23°C); der Natrium-Gehalt beträgt ca. 1,5 ppm.

### Katalysator:

Als Katalysator wird Tetraphenylphosphoniumphenolat der Firma Rhein Chemie Rheinau GmbH (Mannheim Deutschland) in Form eines Masterbatches eingesetzt. Tetraphenylphosphoniumphenolat wird als Mischkristall mit Phenol eingesetzt und enthält ca. 70 % Tetraphenylphosphoniumphenolat. Die nachfolgenden Mengen beziehen sich auf die von der Firma Rhein Chemie erhaltene Substanz (als Mischkristall mit Phenol).

Der Masterbatch wird als 0,25-%ige Mischung hergestellt. Hierzu werden 4982 g mit 18 g Tetraphenylphosphoniumphenolat im Rhönradmischer für 30 Minuten aufgetrudelt. Der Masterbatch wird im Verhältnis 1:10 dosiert, so dass in der Gesamtmenge an Polycarbonat der Katalysator mit einem Anteil von 0,025 Gew.-% vorliegt.

Die Herstellung des Blockcokondensats aus der Polycarbonat-Komponente und der Siloxan-Komponente erfolgt über ein Reaktivextrusionsverfahren gemäß WO 2015/052110 A1.

Natriumgehalt: Der Natriumgehalt wird über Massenspektrometrie mit induktiv gekoppeltem Plasma (ICP-MS) bestimmt.
Material B1: Kompaktierter Talk mit einem Talkgehalt von 98 Gew.-%, einem Eisenoxidgehalt von 1,9 Gew.-%, einem Aluminiumoxidgehalt von 0,2 Gew.-%, Glühverlust (DIN 51081/1000 °C) von 5,4 Gew.-%, pH-Wert (nach EN ISO 787-9:1995) von 9,15, D₅₀ (Sedimentationsanalyse) von 2,2 µm; BET-Oberfläche nach ISO 4652:2012) 10 m²/g, Typ: Finntalc M05SLC, Hersteller: Mondo Minerals B. V.
Material B2: Kompaktierter Talk mit einem Talkgehalt von 99 Gew.-%, einem Eisenoxidgehalt von 0,4 Gew.-%, einem Aluminiumoxidgehalt von 0,4 Gew.-%, Glühverlust von 6,0 Gew.-%, pH-Wert (nach EN ISO 787-9:1995) von 9,55, D₅₀ (Sedimentationsanalyse) von 0,65 µm; BET-Oberfläche 13,5 m²/g, Typ: HTP Ultra5c, Hersteller: Imifabi.
Material Cl: Ethylen-Propylen-Octen-Terpolymer mit Maleinsäureanhydrid (Ethylen:Propylen:Octen 87:6:7 (Gewichtsverhältnis)), CAS-Nr. 31069-12-2, mit Molekulargewicht (Gelpermeationschromatographie in ortho-Dichlorbenzol bei 150 °C mit Polystyrolkalibrierung) Mw = 6.301 g/mol, Mₙ = 1159 g/mol, Dichte 940 kg/m³, Säurezahl 53 mg KOH/g, Maleinsäureanhydridanteil 4,4 Gew.-%, bezogen auf das Terpolymer Cl.
Material C2: Ethylen-Propylen-Octen-Terpolymer mit Maleinsäureanhydrid mit einem mittleren Molekulargewicht (Gelpermeationschromatographie in ortho-Dichlorbenzol bei 150 °C mit Polystyrolkalibrierung) M_{w} = 14400 g/mol, Mₙ = 1.880 g/mol, Säurezahl 23 mg KOH/g.
Material C3: Propylen-Maleinsäureanhydrid-Polymer mit einem mittleren Molekulargewicht (Gelpermeationschromatographie in ortho-Dichlorbenzol bei 150 °C mit Polystyrolkalibrierung) M_{w} = 170.300 g/mol, Mₙ = 10.100 g/mol, Säurezahl 6 mg KOH/g.
Material C4: HD-Polyethylen-Maleinsäureanhydrid-Polymer, mit einem mittleren Molekulargewicht (Gelpermeationschromatographie in ortho-Dichlorbenzol bei 150 °C mit Polystyrolkalibrierung) M_{w} = 153.500 g/mol, Mₙ = 18.500 g/mol, Säurezahl 0 mg KOH/g.
Material C5: Propylen-Maleinsäureanhydrid-Polymer mit einem mittleren Molekulargewicht (Gelpermeationschromatographie in ortho-Dichlorbenzol bei 150 °C mit Polystyrolkalibrierung) M_{w} = 20700 g/mol, Mₙ = 1460 g/mol, Säurezahl 78 mg KOH/g.
Material C6: Propylen-Ethylen-Maleinsäureanhydrid-Copolymer mit einem mittleren Molekulargewicht (Gelpermeationschromatographie in ortho-Dichlorbenzol bei 150 °C mit Polystyrolkalibrierung) Mw = 20670 g/mol, Mₙ = 2081 g/mol, Säurezahl 46 mg KOH/g.
Material C7: Ethylen-Octen-Maleinsäureanhydrid-Copolymer mit einem mittleren Molekulargewicht (Gelpermeationschromatographie in ortho-Dichlorbenzol bei 150 °C mit Polystyrolkalibrierung) M_{w} = 196000 g/mol, Mₙ = 13140 g/mol, Säurezahl 0,2 mg KOH/g.
Material C8: HD-Ethylen-Maleinsäureanhydrid-Polymer mit einem mittleren Molekulargewicht (Gelpermeationschromatographie in ortho-Dichlorbenzol bei 150 °C mit Polystyrolkalibrierung) Mw = 96550 g/mol, Mₙ = 6258 g/mol, Säurezahl 5 mg KOH/g.
Material D: Titandioxid, beschlichtetes Titandioxid, Kronos® 2230 (Kronos Titan GmbH, Deutschland).

Alle Säurezahlen der Komponenten C1 bis C8 wurden nach DIN ISO 17025:2005 von der Firma Currenta GmbH u. Co. OHG, Leverkusen, über potentiometrische Titration mit alkoholischer Kaliumhydroxid-Lösung bestimmt.

Die Bestimmung der Schmelze-Volumenfließrate (MVR) erfolgte nach ISO 1133-1:2012 bei einer Prüftemperatur von 300 °C, Masse 1,2 kg mit dem Gerät Zwick 4106 der Firma Zwick Roell. Dabei steht die Abkürzung MVR für die Anfangs-Schmelze-Volumenfließrate (nach 4 Minuten Vorwärmzeit), die Abkürzung IMVR für die Schmelze-Volumenfließrate nach 19 min.

Die Bestimmung der relativen Lösungsviskosität "eta rel"/"ηᵣₑₗ" erfolgte durch Doppelbestimmung nach ISO1628-1:2009 mit einem Ubbelohde-Viskosimeter in einer Konzentration von 5g/l in Dichlormethan. Im Folgenden werden immer die Mittelwerte der relativen Lösungsviskosität angegeben.

Die Bestimmung der Kennwerte des Durchstoßexperimentes (multiaxiale Schlagzähigkeit) erfolgte bei 23 °C gemäß DIN EN ISO 6603-2:2002 an Prüfplatten der Maße 60 mm x 60 mm x 2 mm.

Die Schlagzähigkeit nach Charpy wurde nach ISO 179/1eU (Version von 2010) an einseitig angespritzten Prüfstäben der Dimension 80 mm x 10 mm x 4 mm bei 23 °C gemessen.

Die Messung der Kerbschlagzähigkeit nach Charpy wurde nach ISO 179/1eA (Version von 2010) an Probekörpern der Geometrie 80 mm x 10 mm x 4 mm³ bei 23 °C durchgeführt.

Die Vicat-Erweichungstemperatur VST/B50 als Maß für die Wärmeformbeständigkeit wurde gemäß ISO 306 (Version von 2014) an Prüfkörpern der Abmessung 80 mm x 10 mm x 4 mm mit einer Stempellast von 50 N und einer Aufheizgeschwindigkeit von 50°C/h mit dem Gerät Coesfeld Eco 2920 der Firma Coesfeld Materialtest bestimmt.

Der E-Modul und die Bruchdehnung wurden gemäß ISO 527 (Version von 1996) an einseitig angespritzten Schulterstäben mit einem Kern der Dimension 80 mm x 10 mm x 4 mm bei 23 °C gemessen.

Der Vergleich der Fließfähigkeit der thermoplastischen Formmassen wurde jeweils gegenüber der in den Formmassen verwendeten reinen Komponente A angestellt: Der Fließweg der Komponente A wurde in dem verwendeten Werkzeug (Kavität 2 mm x 8 mm x 1000 mm) auf eine definierte Fließlänge eingestellt. Die zu vergleichenden Formmassen wurden anschließend bei konstant gehaltenen Spritzgussparametern (u.a. Temperatur der Schmelze, Temperatur des Werkzeugs, Einspritzzeit, Einspritzgeschwindigkeit) verarbeitet. Das Formteil wurde ohne weitere Nachdruckzeit ausgeworfen. Die erreichte Fließlänge einer Formmasse ist der Mittelwert aus 5 Fließspiralen, wobei die Abweichung in einer Reihe von Fließspiralen maximal ± 10 mm betragen darf. Die erreichte Fließlänge wird im prozentualen Verhältnis zur zuvor eingestellten Fließlänge der Komponente A angegeben.

Die Wärmeleitfähigkeit wurde bestimmt gemäß ASTM E 1461 (Version von 2013, Nano Flash Methode).

Der lineare Wärmeausdehnungskoeffizient (CLTE) wurde bestimmt gemäß DIN 53752-1980-12.

Das Brandverhalten wird nach UL 94V an Stäben der Abmessung 127 mm x 12,7 mm x,,in der Tabelle angegebene mm" gemessen.

Die in den folgenden Tabellen angegebenen Komponenten wurden entweder in einem Doppelschneckenextruder (Tabellen 1, 2, 4-6) oder in einem Co-Kneter (Tabellen 3 und 3a) compoundiert, wobei die Komponenten B) erst später zu den bereits aufgeschmolzenen oder in der Schmelze dispergierten Komponenten A), C) und ggf. D) gegeben wurden. Die Dosierung von C) und D) erfolgte zeitgleich mit A) oder unmittelbar nach dem Aufschmelzen der Komponente A). Die Compoundierung erfolgte in einem Temperaturbereich von 260 °C bis 340 °C, bezogen auf die Schmelzetemperatur der Komponente A). Im Doppelschneckenextruder wurden Temperaturen von 280 °C bis 330 °C verwendet, im Co-Kneter Temperaturen von 260-280 °C.

Die folgenden Tabellen zeigen die Zusammensetzungen und jeweiligen Ergebnisse.

**Tabelle 1: Stabilisierung der Zusammensetzung (Versuche 1bis 9 (erfindungsgemäß) und Vergleichsversuche V1 bis V8)**

| **Komponente** | | **V1** | **1** | **2** | **3** | **4** | **5** | **V2** | **V3** | **V4** | **V5** | **V6** | **6** | **7** | **8** | **9** | **V7** | **V8** |
|---|---|---|---|---|---|---|---|---|---|---|---|---|---|---|---|---|---|---|
| (A2) | **Gew.-%** | 79,90 | 79,75 | 79,50 | 79,25 | 79,00 | 78,00 | 77,00 | 100,0 0 | 77,00 | 100,0 0 | 79,90 | 79,75 | 79,50 | 79,25 | 79,00 | 80,00 | 100,0 0 |
| (B1) | **Gew.-%** | 20,00 | 20,00 | 20,00 | 20,00 | 20,00 | 20,00 | 20,00 | 20,00 | 20,00 | 20,00 | 20,00 | 20,00 | 20,00 | 20,00 | 20,00 | 20,00 | |
| (C1) | **Gew.-%** | 0,10 | 0,25 | 0,50 | 0,75 | 1,00 | 2,00 | 3,00 | | | | | | | | | | |
| (C2) | **Gew.-%** | | | | | | | | 1,00 | 2,00 | 3,00 | | | | | | | |
| (C5) | **Gew.-%** | | | | | | | | | | | 0,10 | 0,25 | 0,50 | 0,75 | 1,00 | | |

| **Methode** | **Einheit** | | | | | | | | | | | | | | | | | |
|---|---|---|---|---|---|---|---|---|---|---|---|---|---|---|---|---|---|---|
| **MVR** | cm³/(10 min) | **27,0** | **17,3** | **10,2** | **8,8** | **7,7** | **6,8** | **7,1** | **14,2** | **10,7** | **8,0** | **25,5** | **13,0** | **9,3** | **7,9** | **7,2** | **25,7** | **8,7** |
| **IMVR** | cm³/(10 min) | **26,6** | **23,9** | **17,5** | **12,7** | **10,4** | **8,1** | **8,5** | **19,9** | **13,6** | **9,3** | **32,3** | **21,3** | **13,7** | **10,3** | **9,0** | **25,2** | **8,9** |
| **Relative Lösungsviskosität** | | **1,207** | **1,227** | **1,250** | **1,261** | **1,261** | **1,264** | **1,267** | **1,218** | **1,241** | **1,263** | **1,206** | **1,240** | **1,257** | **1,269** | **1,270** | **1,207** | **1,288** |

| **Durchstoßversuch** | | | | | | | | | | | | | | | | | | |
|---|---|---|---|---|---|---|---|---|---|---|---|---|---|---|---|---|---|---|
| Maximalkraft [Fm] | N | **1587** | **2593** | **3887** | **4316** | **4304** | **4151** | **1699** | **3664** | **1553** | **1490** | **1778** | **3763** | **4498** | **4415** | **4496** | **1234** | **5471** |
| Energie bei Maximalkraft [Wm] | J | 3,4 | 8,1 | 21,7 | 29,1 | 29,3 | 28,4 | 4,8 | 22,4 | 4 | 4,7 | 4,0 | 19,7 | 31,5 | 30,4 | 32,6 | 2,4 | 56,6 |
| Gesamtenergie [Wp] | J | 4,0 | 9,4 | 23,8 | 31,5 | 31,9 | 31 | 10,1 | 24,4 | 7,4 | 8,8 | 4,8 | 21,4 | 33,8 | 33,0 | 35,3 | 2,9 | 59,2 |
| Gesamtverformung [Sp] | mm | 5,6 | 7,7 | 11,9 | 13,9 | 14 | 14,2 | 10,4 | 12,1 | 8,7 | 10,3 | 5,9 | 11,0 | 14,1 | 14,1 | 14,7 | 5,2 | 19,5 |
| **Charpy** | kJ/m² | **55** | **65** | **123** | **185** | **209** | **215** | **296** | **176** | **235** | **254** | **57** | **78** | **159** | **201** | **249** | **48** | |
| **VICAT-Temperatur** | °C | **141,6** | **141,9** | **143,3** | **143,6** | **143,8** | **143,5** | **143,0** | **143,0** | **143,9** | **142,6** | **141,0** | **143,0** | **144,5** | **145,3** | **145,2** | **141,8** | **145,1** |

| **Zugversuch** | | | | | | | | | | | | | | | | | | |
|---|---|---|---|---|---|---|---|---|---|---|---|---|---|---|---|---|---|---|
| E-Modul (1 mm/min) | MPa | 4629 | 4786 | 4723 | 4712 | 4834 | 4602 | 4388 | 4635 | 4173 | 3975 | 4703 | 4898 | 4773 | 4928 | 4895 | 4686 | 2352 |
| Streckspannung (5 mm/min) | MPa | 66 | 64,4 | 61,4 | 60,4 | 59,5 | 56,3 | 54,7 | 58,1 | 55,5 | 53,4 | 66,6 | 64,8 | 62,6 | 61,6 | 60,6 | 0 | 61,5 |
| Streckdehnung (5 mm/min) | % | 3,6 | 3,6 | 3,8 | 4,0 | 3,9 | 4,0 | 4,1 | 3,9 | 4,1 | 4,4 | 3,8 | 3,7 | 3,9 | 3,9 | 4,0 | 0 | 6,1 |
| Bruchspannung (5 mm/min) | MPa | 65,8 | 62,5 | 54,7 | 50,2 | 47,5 | 37,4 | 27,1 | 49,2 | 44,6 | 47,3 | 65,5 | 60,5 | 53,8 | 49,6 | 43,7 | 66,1 | 67,3 |
| Bruchdehnung (5 mm/min) | % | 3,5 | 4,6 | 6,4 | 7,9 | 8,3 | 10,2 | 10 | 9 | 20,5 | 12,5 | 4,5 | 5,5 | 6,9 | 8,4 | 11,1 | 3,4 | 113,6 |
| Nominelle Bruchdehnung (5 mm/min) | % | 3 | 4 | 5 | 5 | 6 | 7 | 6 | 6 | 12 | 8 | 4 | 4 | 5 | 6 | 7 | 3,0 | 94 |

Die Tabelle 1 zeigt, dass abhängig von der Säurezahl und der verwendeten Menge der Komponente C die relative Lösungsviskosität der Komponente A trotz Gegenwart der Komponente B stabilisiert werden kann: Je mehr Komponente C zugesetzt wird und je höher die Säurezahl der Komponente C, desto mehr nähert sich die Lösungsviskosität dem Niveau der reinen Komponente A (V8) an. Die relative Lösungsviskosität der Komponente A) liegt üblicherweise zwischen 1,275 und 1,290. Fehlt die Komponente C), so wird die Lösungsviskosität von A) merklich herabgesetzt (V7).

Die beobachtete Stabilisierung der relativen Lösungsviskosität zeigt sich auch durch eine Senkung des MVR und IMVR sowie in einer kleineren Differenz von IMVR und MVR. Je mehr Komponente C zugesetzt wird und je höher die Säurezahl der Komponente C ist, desto mehr nähern sich MVR und IMVR dem Niveau der reinen Komponente A (V8) an und desto geringer wird die Differenz zwischen IMVR und MVR, was auf eine starke Abschwächung der Molekulargewichts-verringernden Reaktionen unter Temperatur hinweist. Ein merklicher Effekt auf MVR und IMVR tritt erst ab Konzentrationen der Komponente C) von 0,10 Gew.-Teile auf 10 Gew.-Teile der Komponente B) auf (Vergleich der Versuche V7, V8 und V1 mit 1 bzw. V6 mit 6).

Durch die Verwendung der Komponente C) wird zudem eine signifikante Verbesserung der Zähigkeit der Formmasse ab 0,10 Gew.-Teile der Komponente C) pro 10 Gew.-Teile der Komponente B) erreicht. Ab Konzentrationen von 1,5 Gewichtsteile Komponente C) pro 10 Gewichtsteile Komponente B) tritt jedoch eine Verschlechterung im Durchstoßversuch (multiaxiale Schlagzähigkeit) ein (Durchstoßversuch; Vergleich der Versuche 5 und V2).

Liegt zudem die Säurezahl der Komponente C) unterhalb von 30 mg KOH/g, so wird eine Stabilisierung der Lösungsviskosität und eine Senkung des MVR/IMVR erst bei höheren Konzentrationen von C) erzielt (siehe Versuche V3 und V4 im Vergleich zu V5 sowie zu 4, 5 und 9), wobei sich diese höheren Konzentrationen von C) aber wiederum negativ auf den Durchstoßversuch auswirken.

Bei nahezu allen Versuchen ist zu erkennen, dass eine gute Schlagzähigkeit nach Charpy erzielt wird. Es wird jedoch auch deutlich, dass auf Basis dieser Schlagzähigkeit nach Charpy keine Rückschlüsse auf die multiaxiale Schlagzähigkeit im Durchstoßversuch gezogen werden können. Diese sind überraschenderweise jeweils nur für die erfindungsgemäßen Versuche auf hohem Niveau.

Zudem ist weiterhin zu erkennen, dass sich die Vicat-Temperatur im erfindungsgemäßen Gehaltsbereich der Komponente C) der Vicat-Temperatur der reinen Komponente A) (Versuch V8) annähert. Diese Tendenz ist umso ausgeprägter, je höher die Säurezahl und je höher das Molekulargewicht der Komponente C) ist und je näher die relative Lösungsviskosität bei gleicher Menge der Komponente C) an der relativen Lösungsviskosität der reinen Komponente A liegt.

Insgesamt kann der Tabelle 1 somit entnommen werden, dass nur spezielle Wachse C) mit speziellen Säurezahlen und Molmassen geeignet sind, um eine ausgewogene Balance von Lösungsviskosität, Vicat-Temperatur, Verstärkung (E-Modul) und multiaxialer Schlagzähigkeit zu erzielen. Insbesondere für gute multiaxiale Schlagzähigkeit und eine hohe Vicat-Temperatur hat die Konzentration der Komponente C) eine Obergrenze. Wird zuviel der Komponente C) zugesetzt, verschlechtern sich multiaxialer Durchstoß, Vicat-Temperatur sowie E-Modul, Versuche Tabelle 1, 1-5 und 6-9 gegen V2-V5, insbesondere 4-5 und 9 gegen V3-V4.

**Tabelle 2: Vergleich unterschiedlicher Wachse C) (Versuche 10 bis 12 (erfindungsgemäß) und Vergleichsversuche V9 bis V12)**

| **Komponente** | | **10** | **V9** | **V10** | **11** | **12** | **V11** | **V12** |
|---|---|---|---|---|---|---|---|---|
| (A1) | **Gew.-%** | 79,00 | 79,00 | 79,00 | 79,00 | 79,00 | 79,00 | 79,00 |
| (B1) | **Gew.-%** | 20,00 | 20,00 | 20,00 | 20,00 | 20,00 | 20,00 | 20,00 |
| (C1) | **Gew.-%** | 1,00 | | | | | | |
| (C3) | **Gew.-%** | | 1,00 | | | | | |
| (C4) | **Gew.-%** | | | 1,00 | | | | |
| (C5) | **Gew.-%** | | | | 1,00 | | | |
| (C6) | **Gew.-%** | | | | | 1,00 | | |
| (C7) | **Gew.-%** | | | | | | 1,00 | |
| (C8) | **Gew.-%** | | | | | | | 1,00 |

| **Methode** | **Einheit** | | | | | | | |
|---|---|---|---|---|---|---|---|---|
| **MVR** | cm³/(10 min) | 12,7 | 28,5 | 19,9 | 12,1 | 15,0 | 17,4 | 16,9 |

| **Durchstoßversuch** | | | | | | | | |
|---|---|---|---|---|---|---|---|---|
| Maximalkraft [Fm] | N | **3286** | **935** | **706** | **3157** | **3123** | **1004** | **922** |
| Energie bei Maximalkraft [Wm] | J | 16 | 1,9 | 1,7 | 13,3 | 12,8 | 2,1 | 2 |
| Gesamtenergie [Wp] | J | 18,7 | 2,6 | 2,3 | 15,2 | 14,6 | 2,8 | 2,8 |
| Gesamtverformung [Sp] | mm | 11,5 | 5,2 | 5,7 | 9,9 | 9,7 | 5,5 | 5,6 |
| **Charpy** | kJ/m² | **108** | **44** | **41** | **93** | **93** | **58** | **47** |
| **VICAT B** | °C | **144,0** | **142,0** | **140,8** | **146,4** | **144,8** | **140,7** | **141,7** |

Wie der Tabelle 2 entnommen werden kann, führen unterschiedliche Komponenten C) zu unterschiedlichen Ergebnissen im Durchstoßversuch. Der Vergleich in Tabelle 2 verdeutlicht, dass nur mit den erfindungsgemäßen Komponenten C1), C5) und C6) mit erfindungsgemäßer Säurezahl und Molmasse gute multiaxiale Schlagzähigkeiten in Kombination mit hoher Vicat-Temperatur erzielt werden.

**Tabelle 3: Eigenschaften der Zusammensetzungen (Versuche 13 bis 16 (erfindungsgemäß))**

| **Komponente** | | | **13** | **14** | **15** | **16** |
|---|---|---|---|---|---|---|
| (A1) | | **Gew.-%** | 89,50 | 79,00 | 68,50 | 58,00 |
| (B1) | | **Gew.-%** | 10,00 | 20,00 | 30,00 | 40,00 |
| (C1) | | **Gew.-%** | 0,50 | 1,00 | 1,50 | 2,00 |

| **Methode** | **Bedingungen** | **Einheit** | | | | |
|---|---|---|---|---|---|---|
| **MVR** | | cm³/(10 min) | 16,1 | 13,3 | 9,7 | 6,4 |
| **Fließweg** | Fließstrecke gegen A1) | % | 106 | 108 | 108 | 108 |
| **VICAT B** | | °C | 143,9 | 143,4 | 144,0 | 143,3 |
| **Wärmeleitfähigkeit** | in plane | W/(mK) | 0,335 | 0,563 | 0,965 | 1,372 |
| | through plane | W/(mK) | 0,217 | 0,228 | 0,25 | 0,282 |
| **CLTE** | parallel | ppm/K | 51,74 | 42,04 | 36,92 | 30,75 |
| | transverse | ppm/K | 59,24 | 55,52 | 52,1 | 52,15 |

| **Durchstoßversuch** | | | | | | |
|---|---|---|---|---|---|---|
| Maximalkraft [Fm] | | N | | | 2591 | 683 |
| Energie bei Maximalkraft [Wm] | | J | | | 10,4 | 2,3 |
| Gesamtenergie [Wp] | | J | | | 12,2 | 3,3 |
| Gesamtverformung [Sp] | | mm | | | 9,4 | 6,4 |
| **Charpy** | | kJ/m² | | | 83,5 | 20,1 |

**Tabelle 3a - Beispiel 15 und 16 mit Titandioxid:**

| **Komponente** | | **15a** | **16a** |
|---|---|---|---|
| (A1) | **Gew.-%** | 66,50 | 56,00 |
| (B1) | **Gew.-%** | 30,00 | 40,00 |
| (C1) | **Gew.-%** | 1,50 | 2,00 |
| (D) | **Gew.-%** | 2,00 | 2,00 |

| **Methode** | **Einheit** | | |
|---|---|---|---|
| **MVR** | cm³/10min | **9,4** | **4,6** |
| **IMVR** | cm³/10min | **11,2** | **5,8** |
| **relative Lösungsviskosität** | | **1,254** | **1,255** |

| **Durchstoßversuch** | | | |
|---|---|---|---|
| Maximalkraft [Fm] | N | **2924** | **670** |
| Energie bei Maximalkraft [Wm] | J | 13,2 | 2,2 |
| Gesamt-energie [Wp] | J | 15,5 | 3,2 |
| Gesamt-verformung [Sp] | mm | 10,8 | 6,9 |
| **Charpy** | kJ/m² | **78** | **20** |
| **VICAT Temperatur** | °C | **144,4** | **144,6** |

| **Zugversuch** | | | |
|---|---|---|---|
| E-Modul (1 mm/min) | MPa | 5866 | 7176 |
| Streckspannung (5 mm/min) | MPa | 51,6 | 0 |
| Streckdehnung (5 mm/min) | % | 2,9 | 0 |
| Bruchspannung (5 mm/min) | MPa | 49,5 | 44,8 |
| Bruchdehnung (5 mm/min) | % | 3,6 | 1,3 |
| Nominelle Bruchdehnung (5 mm/min) | % | 3 | 1 |
| **Wärmeleitfähigkeit** | in plane, W/(mK) | 0,91 | 1,41 |
| | through plane, W/(mK) | 0,23 | 0,28 |
| **CLTE** | parallel, ppm/K | 35,24 | 31,88 |
| | transverse, ppm/K | 54,03 | 51,20 |

Wie der Tabelle 3 entnommen werden kann, bleibt der in der Fließspirale zurückgelegte Fließweg der Zusammensetzungen 13 bis 16 immer konstant höher als der Fließ weg des reinen Polycarbonats A, obwohl der Fachmann bei Betrachtung der MVR-Werte eigentlich erwarten würde, dass die Fließfähigkeit bei steigendem Gehalt der Komponente B) sinkt. Auch bei 50 Gew.-% B) können noch sehr gute Fließwege realisiert werden. Die erfindungsgemäßen Beispiele 13-16 weisen darüber hinaus eine einzigartige Kombination von hoher Fließfähigkeit und hohem Füllstoffgehalt auf, wobei über den Füllstoffgehalt zusätzliche vorteilhafte Eigenschaften wie Wärmeleitfähigkeit und Wärmeformbeständigkeit erreicht werden. Überraschenderweise können trotz Zugabe der Komponente C), welche sich an die Oberfläche der Talk-Partikel anlagert, dennoch hervorragende Wärmeleitfähigkeiten von bis zu 2 W/(mK), bezogen auf die Fläche des Spritzgusskörpers nach ASTM E 1461:2013, erzielt werden. Die Zähigkeit im Durchstoß-Versuch bleibt trotz signifikantem Füllstoffgehalt von 30 bzw. 40 Gew.-% der Komponente B) auf hohem Niveau (Beispiele 15 und 16).

**Tabelle 4: Eigenschaften der Zusammensetzungen (Versuche 17 und 18 (erfindungsgemäß))**

| **Komponente** | | | **17** | **18** |
|---|---|---|---|---|
| (A2) | | **Gew.-%** | 77,00 | 100,00 |
| (B1) | | **Gew.-%** | 20,00 | |
| (C1) | | **Gew.-%** | 1,00 | |
| (D) | | **Gew.-%** | 2,00 | |

| **Methode** | **Bedingungen** | **Einheit** | | |
|---|---|---|---|---|
| **MVR** | | cm³/(10 min) | 8,7 | 8,7 |
| **Fließweg** | Fließstrecke gegen A2) | % | 115 | 100 |

Anhand von Tabelle 4 lässt sich erkennen, dass die Fließwegverbesserung bei einem viskoseren Polycarbonat (A2) deutlicher ausfällt als bei einem Polycarbonat mit geringerer Viskosität (Vergleich mit Tabelle 3). Erneut korreliert der verbesserte Fließweg nicht mit dem erhaltenen MVR.

**Tabelle 5: Stabilisierung eines gefüllten Polysiloxan-Polycarbonat-Blockcokondensats (Versuch 19 (erfindungsgemäß) und Vergleichsversuch V13)**

| **Komponente** | | | **V13** | **19** |
|---|---|---|---|---|
| (A3) | | **Gew.-%** | 80,00 | 79,00 |
| (B2) | | **Gew.-%** | 20,00 | 20,00 |
| (C1) | | **Gew.-%** | | 1,00 |

| **Methode** | **Bedingungen** | **Einheit** | | |
|---|---|---|---|---|
| **MVR** | | cm³/(10 min) | 39,1 | 6,7 |
| **IMVR** | | cm³/(10 min) | 39,3 | 8,4 |
| **relative Lösungsviskosität** | | | **1,189** | **1,267** |

| **Durchstoßversuch** | | | | |
|---|---|---|---|---|
| Maximalkraft [Fm] | | N | **745** | **3282** |
| Energie bei Maximalkraft [Wm] | | J | 1,2 | 17,4 |
| Gesamtenergie [Wp] | | J | 1,7 | 21,6 |

| Gesamtverformung [Sp] | | mm | 4,8 | 13 |
|---|---|---|---|---|
| **Charpy** | 23 °C | kJ/m² | **45** | **157** |
| **VICAT B** | 50 K/h | °C | **140,3** | **141,9** |
| | 23 °C | | | |

| **Zugversuch** | | | | |
|---|---|---|---|---|
| E-Modul (1 mm/min) | | MPa | **4341** | **4005** |
| Streckspannung (5 mm/min) | | MPa | 0 | 51,4 |
| Streckdehnung (5 mm/min) | | % | 0 | 3,8 |
| Bruchspannung (5 mm/min) | | MPa | 59,7 | 32,6 |
| Bruchdehnung (5 mm/min) | | % | 2,8 | 14,2 |
| Nominelle Bruchdehnung (5 mm/min) | | % | 3 | 9 |

Die Ergebnisse der Tabelle 5 belegen, dass auch unter Verwendung eines Polysiloxan-Polycarbonat-Blockcokondensats als Komponente A) eine Stabilisierung durch die erfindungsgemäße in-situ Beschlichtung des Talks B) durch die Komponente C1) auftritt, was an einer höheren relativen Lösungsviskosität und einem niedrigeren MVR sowie IMVR ersichtlich wird. Auch wird durch die erfindungsgemäße Komponente C) eine signifikante Verbesserung der (multiaxialen) Schlagzähigkeit erzielt.

## Patentansprüche

1. Zusammensetzung, erhalten durch Vermischen zumindest der Komponenten A) bis C), wobei
A) Polycarbonat ist,
B) unbeschlichteter Talk ist und
C) mindestens ein anhydridmodifiziertes alpha-Olefin-Polymer mit einer Säurezahl von mindestens 30 mg KOH/g und einem mittleren Molekulargewicht Mw von 4.000 bis 40.000 g/mol ist, wobei das mittlere Molekulargewicht Mw bestimmt wird mittels Gelpermeationschromatographie in ortho-Dichlorbenzol bei 150 °C mit Polystyrolkalibrierung und die Säurezahl bestimmt wird mittels potentiometrischer Titration mit alkoholischer Kaliumhydroxid-Lösung gemäß DIN ISO 17025:2005,
wobei die Mengen von B) und C) vor der Vermischung so aufeinander abgestimmt sind, dass pro 10 Gewichtsteile der Komponente B) 0,10 bis 1,4 Gewichtsteile der Komponente C) eingesetzt werden und
wobei die Zusammensetzung frei von Polyestern und Pfropfpolymerisaten ist.

2. Zusammensetzung gemäß Anspruch 1, wobei der Talk kompaktiert ist.

3. Zusammensetzung gemäß Anspruch 1 oder 2, wobei Komponente C)
Ca) 90,0-98,0 Gew.-% alpha-Olefin-Polymer und
Cb) 2,0-10,0 Gew.-% Anhydrid
umfasst.

4. Zusammensetzung gemäß einem der vorhergehenden Ansprüche, wobei die Säurezahl der Komponente C) 30 bis 110 mg KOH/g beträgt.

5. Zusammensetzung gemäß einem der vorhergehenden Ansprüche, enthaltend 50 bis 94,9 Gew.-% der Komponente A) und 5,00 bis 45,00 Gew.-% Komponente B).

6. Zusammensetzung gemäß einem der vorhergehenden Ansprüche, wobei Komponente A) ausgewählt ist aus mindestens einem aus der Gruppe der aromatischen Homopolycarbonate und Copolycarbonate oder Mischungen hieraus.

7. Zusammensetzung gemäß einem der vorhergehenden Ansprüche, wobei Komponente A) ein siloxanhaltiges Polycarbonat ist.

8. Zusammensetzung nach einem der Ansprüche 1 bis 7, **dadurch gekennzeichnet, dass** die Zusammensetzung mindestens einen weiteren Bestandteil umfasst, welcher ausgewählt ist aus der Gruppe, bestehend aus Flammschutzmitteln, Antitropfmitteln, Thermostabilisatoren, Entformungsmitteln, Antioxidantien, UV-Absorbern, IR-Absorbern, Antistatika, optischen Aufhellern, Lichtstreumitteln, Farbmitteln und/oder Füllstoffen, welche von Talk verschieden sind.

9. Zusammensetzung, bestehend aus
A) aromatischem Polycarbonat,
B) Talk, wobei der eingesetzte Talk unbeschlichtet ist,
C) mindestens einem anhydridmodifizierten alpha-Olefin-Polymer mit einer Säurezahl von mindestens 30 mg KOH/g und einem mittleren Molekulargewicht Mw von 4.000 bis 40.000 g/mol, wobei das mittlere Molekulargewicht Mw bestimmt wird mittels Gelpermeationschromatographie in ortho-Dichlorbenzol bei 150 °C mit Polystyrolkalibrierung und die Säurezahl bestimmt wird mittels potentiometrischer Titration mit alkoholischer Kaliumhydroxid-Lösung gemäß DIN ISO 17025:2005,
und optional einem oder mehreren Additiven, ausgewählt aus der Gruppe, bestehend aus Flammschutzmitteln, Antitropfmitteln, Thermostabilisatoren, Entformungsmitteln, Antioxidantien, UV-Absorbern, IR-Absorbern, Antistatika, optischen Aufhellern, Lichtstreumitteln, Farbmitteln, wobei die Mengen von B) und C) vor der Vermischung so aufeinander abgestimmt sind, dass pro 10 Gewichtsteile unbeschlichtetem Talk 0,10 bis 1,4 Gewichtsteile der Komponente C) eingesetzt werden,

10. Verwendung von anhydridmodifiziertem alpha-Olefin-Polymer mit einer Säurezahl, bestimmt mittels potentiometrischer Titration mit alkoholischer Kaliumhydroxid-Lösung gemäß DIN ISO 17025:2005, von mindestens 30 mg KOH/g und einem mittleren Molekulargewicht Mw von 4.000 bis 40.000 g/mol, wobei das mittlere Molekulargewicht Mw bestimmt wird mittels Gelpermeationschromatographie in ortho-Dichlorbenzol bei 150 °C mit Polystyrolkalibrierung, zur Stabilisierung von Polycarbonat in einer Zusammensetzung, der unbeschlichteter Talk zugesetzt wurde,
wobei pro 10 Gewichtsteile des unbeschlichteten Talks 0,10 bis 1,4 Gewichtsteile des anhydridmodifizierten alpha-Olefin-Polymers eingesetzt werden und wobei die Zusammensetzung frei von Polyestern und Pfropfpolymerisaten ist.

11. Verwendung der Zusammensetzung nach einem der Ansprüche 1 bis 9 zur Herstellung eines Formteils, wobei es sich bei dem Formteil um ein Gehäuse oder ein Gehäuseteil im elektronischen Bereich, ein Gehäuse für mobile Elektronik, ein Schutzausrüstungsteil oder ein Karosserieteil im Automobilbereich handelt.

12. Formteil, umfassend die Zusammensetzung nach einem der Ansprüche 1 bis 9.

## Claims

1. Composition obtained by mixing at least components A) to C), wherein
A) is polycarbonate,
B) is unsized talc and
C) is at least one anhydride-modified alpha-olefin polymer having an acid number of at least 30 mg KOH/g and a mean molecular weight M_{w} of 4000 to 40 000 g/mol, where the mean molecular weight M_{w} is determined by means of gel permeation chromatography in ortho-dichlorobenzene at 150°C with polystyrene calibration and the acid number is determined by means of potentiometric titration with alcoholic potassium hydroxide solution according to DIN ISO 17025:2005,
wherein the amounts of B) and C) prior to mixing are matched to one another such that, for every 10 parts by weight of component B), 0.10 to 1.4 parts by weight of component C) are used, and
wherein the composition is free of polyesters and graft polymers.

2. Composition according to Claim 1, wherein the talc has been compacted.

3. Composition according to Claim 1 or 2, wherein component C) comprises
Ca) 90.0%-98.0% by weight of alpha-olefin polymer and
Cb) 2.0%-10.0% by weight of anhydride.

4. Composition according to any of the preceding claims, wherein the acid number of component C) is 30 to 110 mg KOH/g.

5. Composition according to any of the preceding claims, comprising 50% to 94.9% by weight of component A) and 5.00% to 45.00% by weight of component B).

6. Composition according to any of the preceding claims, wherein component A) is selected from at least one from the group of the aromatic homopolycarbonates and copolycarbonates or mixtures thereof.

7. Composition according to any of the preceding claims, wherein component A) is a siloxane-containing polycarbonate.

8. Composition according to any of Claims 1 to 7, **characterized in that** the composition comprises at least one further constituent selected from the group consisting of flame retardants, antidripping agents, thermal stabilizers, demoulding agents, antioxidants, UV absorbers, IR absorbers, antistats, optical brighteners, opacifiers, colorants and/or fillers other than talc.

9. Composition consisting of
A) aromatic polycarbonate,
B) talc, the talc used being unsized,
C) at least one anhydride-modified alpha-olefin polymer having an acid number of at least 30 mg KOH/g and a mean molecular weight M_{w} of 4000 to 40 000 g/mol, where the mean molecular weight M_{w} is determined by means of gel permeation chromatography in ortho-dichlorobenzene at 150°C with polystyrene calibration and the acid number is determined by means of potentiometric titration with alcoholic potassium hydroxide solution according to DIN ISO 17025:2005,
and optionally one or more additives selected from the group consisting of flame retardants, antidripping agents, thermal stabilizers, demoulding agents, antioxidants, UV absorbers, IR absorbers, antistats, optical brighteners, opacifiers, colorants,
wherein the amounts of B) and C) prior to mixing are matched to one another such that, for every 10 parts by weight of unsized talc, 0.10 to 1.4 parts by weight of component C) are used.

10. Use of anhydride-modified alpha-olefin polymer having an acid number, determined by means of potentiometric titration with alcoholic potassium hydroxide solution according to DIN ISO 17025:2005, of at least 30 mg KOH/g and a mean molecular weight M_{w} of 4000 to 40 000 g/mol, where the mean molecular weight M_{w} is determined by means of gel permeation chromatography in ortho-dichlorobenzene at 150°C with polystyrene calibration,
for stabilization of polycarbonate in a composition to which unsized talc has been added,
wherein, for every 10 parts by weight of the unsized talc, 0.10 to 1.4 parts by weight of the anhydride-modified alpha-olefin polymer are used and wherein the composition is free of polyesters and graft polymers.

11. Use of the composition according to any of Claims 1 to 9 for production of a moulding, wherein the moulding is a housing or part of a housing in the electronics sector, a housing for mobile electronics, a protective equipment part or a bodywork part in the automotive sector.

12. Moulding comprising the composition according to any of Claims 1 to 9.

## Revendications

1. Composition, obtenue par mélange d'au moins les composants A) à C),
A) étant un polycarbonate,
B) étant un talc non apprêté et
C) étant au moins un polymère d'alpha-oléfine modifié par anhydride doté d'un indice d'acide d'au moins 30 mg de KOH/g et d'un poids moléculaire moyen M_{w} de 4 000 à 40 000 g/mole, le poids moléculaire moyen M_{w} étant déterminé par chromatographie à perméation de gel dans du ortho-dichlorobenzène à 150 °C avec une calibration au polystyrène et l'indice d'acide étant déterminé au moyen d'une titration potentiométrique avec une solution alcoolique d'hydroxyde de potassium selon la norme DIN ISO 17025:2005,
les quantités de B) et C) avant le mélange étant harmonisées entre elles de telle façon que par 10 parties en poids du composant B), 0,10 à 1,4 partie en poids du composant C) est utilisée et
la composition étant exempte de polyesters et de polymérisats greffés.

2. Composition selon la revendication 1, le talc étant compacté.

3. Composition selon la revendication 1 ou 2, le composant C) comprenant
Ca) 90,0 à 98,0 % en poids de polymère d'alpha-oléfine et
Cb) 2,0 à 10,0 % en poids d'anhydride.

4. Composition selon l'une quelconque des revendications précédentes, l'indice d'acide du composant C) étant de 30 à 110 mg de KOH/g.

5. Composition selon l'une quelconque des revendications précédentes, contenant 50 à 94,9 % en poids du composant A) et 5,00 à 45,00 % en poids de composant B).

6. Composition selon l'une quelconque des revendications précédentes, le composant A) étant choisi parmi au moins l'un du groupe des homopolycarbonates aromatiques et des copolycarbonate ou des mélanges de ceux-ci.

7. Composition selon l'une quelconque des revendications précédentes, le composant A) étant un polycarbonate contenant siloxane.

8. Composition selon l'une quelconque des revendications 1 à 7, **caractérisée en ce que** la composition comprend au moins un ingrédient supplémentaire, qui est choisi dans le groupe constitué par les agents ignifugeants, les agents anti-égoutture, les stabilisants thermiques, les agents de démoulage, les antioxydants, les absorbants UV, les absorbants IR, les antistatiques, les azurants optiques, les agents de diffusion de lumière, les colorants et/ou les charges, qui sont différentes du talc.

9. Composition, constituée
A) d'un polycarbonate aromatique,
B) de talc, le talc utilisé étant non apprêté,
C) au moins un polymère d'alpha-oléfine modifié par anhydride doté d'un indice d'acide d'au moins 30 mg de KOH/g et d'un poids moléculaire moyen M_{w} de 4 000 à 40 000 g/mole, le poids moléculaire moyen M_{w} étant déterminé par chromatographie à perméation de gel dans du ortho-dichlorobenzène à 150 °C avec une calibration au polystyrène et l'indice d'acide étant déterminé au moyen d'une titration potentiométrique avec une solution alcoolique d'hydroxyde de potassium selon la norme DIN ISO 17025:2005,
et éventuellement d'un ou plusieurs additifs, choisis dans le groupe constitué par les agents ignifugeants, les agents anti-égoutture, les stabilisants thermiques, les agents de démoulage, les antioxydants, les absorbants UV, les absorbants IR, les antistatiques, les azurants optiques, les agents de diffusion de lumière, les colorants,
les quantités de B) et C) avant le mélange étant harmonisées entre elles de telle façon que par 10 parties en poids de talc non apprêté, 0,10 à 1,4 partie en poids du composant C) est utilisée.

10. Utilisation d'un polymère d'alpha-oléfine modifié par anhydride doté d'un indice d'acide, déterminé au moyen d'une titration potentiométrique avec une solution alcoolique d'hydroxyde de potassium selon la norme DIN ISO 17025:2005, de 30 mg de KOH/g et d'un poids moléculaire moyen M_{w} de 4 000 à 40 000 g/mole, le poids moléculaire moyen M_{w} étant déterminé par chromatographie à perméation de gel dans du ortho-dichlorobenzène à 150 °C avec une calibration au polystyrène,
pour la stabilisation de polycarbonate dans une composition, à laquelle du talc non apprêté a été ajouté,
par 10 parties en poids du talc non apprêté, 0,10 à 1,4 partie en poids du polymère d'alpha-oléfine modifié par anhydride étant utilisée et la composition étant exempte de polyesters et de polymérisats greffés.

11. Utilisation de la composition selon l'une quelconque des revendications 1 à 9 pour la préparation d'une pièce moulée, la pièce moulée étant un boîtier ou une pièce de boîtier dans le domaine électronique, un boîtier pour l'électronique mobile, une pièce d'équipement de protection ou une pièce de carrosserie dans le domaine automobile.

12. Pièce moulée, comprenant la composition selon l'une quelconque des revendications 1 à 9.
